(19) Europäisches Patentamt
European Patent Office
Office européen des brevets

(11) **EP 3 639 340 B1**

(12) **EUROPÄISCHE PATENTSCHRIFT**

(45) Veröffentlichungstag und Bekanntmachung des Hinweises auf die Patenterteilung:
**24.08.2022 Patentblatt 2022/34**

(21) Anmeldenummer: **18731416.6**

(22) Anmeldetag: **13.06.2018**

(51) Internationale Patentklassifikation (IPC):
**H02J 3/38** (2006.01)   **H02J 3/08** (2006.01)
**F03D 7/04** (2006.01)

(52) Gemeinsame Patentklassifikation (CPC):
**H02J 3/08; F03D 7/0284; H02J 3/381; H02J 3/48; H02J 3/50;** F05B 2270/337; H02J 3/40; H02J 2300/20; H02J 2300/28; Y02E 10/72; Y02E 10/76

(86) Internationale Anmeldenummer:
**PCT/EP2018/065568**

(87) Internationale Veröffentlichungsnummer:
**WO 2018/229088 (20.12.2018 Gazette 2018/51)**

(54) **VERFAHREN ZUM EINSPEISEN ELEKTRISCHER LEISTUNG MITTELS EINER UMRICHTERGEFÜHRTEN ERZEUGUNGSEINHEIT, INSBESONDERE WINDENERGIEANLAGE**

METHOD FOR SUPPLYING ELECTRIC POWER BY MEANS OF A CONVERTER-CONTROLLED GENERATOR UNIT, IN PARTICULAR A WIND TURBINE

PROCÉDÉ D'INJECTION DE LA PUISSANCE ÉLECTRIQUE AU MOYEN D'UNE UNITÉ DE PRODUCTION COMMANDÉE PAR UN CONVERTISSEUR, EN PARTICULIER D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2017 DE 102017112936**

(43) Veröffentlichungstag der Anmeldung:
**22.04.2020 Patentblatt 2020/17**

(73) Patentinhaber: **Wobben Properties GmbH 26607 Aurich (DE)**

(72) Erfinder: **BROMBACH, Johannes 13437 Berlin (DE)**

(74) Vertreter: **Eisenführ Speiser Patentanwälte Rechtsanwälte PartGmbB Postfach 10 60 78 28060 Bremen (DE)**

(56) Entgegenhaltungen:
EP-A1- 2 918 824     WO-A2-2010/055322
DE-A1-102005 026 062     DE-A1-102007 049 251
DE-A1-102015 203 367

• GONZALEZ-LONGATT F ET AL: "Effects of the synthetic inertia from wind power on the total system inertia after a frequency disturbance", POWER ENGINEERING SOCIETY CONFERENCE AND EXPOSITION IN AFRICA (POWERAFRICA), 2012 IEEE, IEEE, 9. Juli 2012 (2012-07-09), Seiten 1-7, XP032364156, DOI: 10.1109/POWERAFRICA.2012.6498636 ISBN: 978-1-4673-2548-6
• FABIO BIGNUCOLO ET AL: "Impact of Distributed Generation Grid Code Requirements on Islanding Detection in LV Networks", ENERGIES, Bd. 10, Nr. 2, 26. Januar 2017 (2017-01-26), Seite 156, XP055499783, DOI: 10.3390/en10020156

**Beschreibung**

Die vorliegende Erfindung betrifft ein Verfahren zum Einspeisen elektrischer Leistung an einem Netzanschlusspunkt in ein elektrisches Versorgungsnetz mit einer umrichtergeführten Erzeugungseinheit, insbesondere mittels einer Windenergieanlage. Außerdem betrifft die vorliegende Erfindung ein Windenergiesystem, insbesondere eine Windenergieanlage oder einen Windpark zum Einspeisen elektrischer Leistung in ein elektrisches Versorgungsnetz.

Es ist bekannt, elektrische Leistung in ein elektrisches Versorgungsnetz mittels einer umrichtergeführten Erzeugungseinheit einzuspeisen. Solche umrichtergeführten Erzeugungseinheiten sind insbesondere Windenergieanlagen oder Windparks. Es kommen aber bspw. auch PV-Anlagen in Betracht, um nur ein weiteres Beispiel zu nennen.

Der Anteil solcher umrichtergeführter Erzeugungseinheiten im elektrischen Versorgungsnetz, das nachfolgend auch vereinfacht als Netz bezeichnet werden kann, nimmt zu und damit kann sich auch Struktur und Verhalten des Netzes verändern, mitunter signifikant verändern. Umrichtergeführte Erzeugungseinheiten, also Erzeugungseinheiten die mittels eines Frequenzumrichters oder Frequenzwechselrichters in das elektrische Versorgungsnetz einspeisen, sind derzeit die am schnellsten regelnden Steuerungseinheiten im Netz. Sie können bspw. sehr schnell auf Frequenzänderungen oder Spannungsänderungen oder Leistungsanforderungen kotrolliert reagieren. Dabei kann diese Art der Reaktion im Wesentlichen durch entsprechende Programmierung oder Einstellung vorgegeben werden. Das kann wiederum dazu führen, dass jede umrichtergeführte Erzeugungseinheit individuell und dabei schnell reagiert.

Damit unterscheiden sich solche umrichtergeführten Erzeugungseinheiten signifikant von Großkraftwerken, die mittels direkt gekoppelter Synchrongenerator in das Netz einspeisen. Solche direkt gekoppelten Synchrongeneratoren zeichnen sich eher durch ein stabiles, im Wesentlichen durch die Physik des Synchrongenerators vorgegebenes Verhalten aus. Schnelle Reaktionen sind im Grunde nur insoweit zu erwarten, wie sie durch die Physik des Synchrongenerators bedingt ist.

Es kommt hinzu, dass die umrichtergeführten Erzeugungseinheiten meist dezentral aufgestellt sind, also geographisch über das Gebiet des Netzes verteilt sind. Damit sind auch die einzelnen Regelungseingriffe der Erzeugungseinheiten auf das Netz verteilt. Für manche Steuerungs- und Schaltmaßnahmen im Netz kann es von Bedeutung sein, dass das Verhalten des Netzes hierbei gut bekannt ist, insbesondere verlässlich vorgeben werden kann. Besonders im Falle eines Netzwiederaufbaus, wenn Teilnetze zusammengeschaltet werden, ist dies von Bedeutung.

Durch den höheren Anteil umrichtergeführter Erzeugungseinheiten ergibt sich dabei ein verändertes Verhalten des Netzes. Darauf kann ggf. dadurch reagiert werden, dass das so veränderte Netz neu analysiert wird. Ggf. kommt auch in Betracht, den umrichtergeführten Erzeugungseinheiten ein Regelungsverhalten vorzugeben.

Es bleibt aber das Problem, dass sich systembedingt umrichtergeführte Erzeugungseinheiten anders als direkt mit dem Netz gekoppelte Synchrongeneratoren verhalten. Auch die Tatsache, dass solche umrichtergeführten Erzeugungseinheiten meist dezentral aufgestellt sind, lässt sich dadurch nicht ändern. Es bleibt, dass das Netz durch einen höheren Anteil umrichtergeführter Erzeugungseinheiten dadurch zu einem Netz mit geringerem Anteil umrichtergeführter Erzeugungseinheiten verändert ist.

Das Deutsche Patent- und Markenamt hat in der Prioritätsanmeldung zu vorliegender Anmeldung folgenden Stand der Technik recherchiert: DE 762 134 A, DE 32 36 071 A1, DE 10 2005 026 062 A1, DE 10 2013 207 264 A1, 10 2014 214 151 A1, DE 10 2015 203 367 A1 und US 2015/0260159 A1. Weiterer Stand der Technik ist den Dokumenten WO2010/055332 A2 und DE102007049251 A1 zu entnehmen.

Der vorliegenden Erfindung liegt somit die Aufgabe zugrunde, zumindest eines der vorstehend genannten Probleme zu adressieren. Insbesondere soll eine Lösung vorgeschlagen werden, die bei Eingriffen im Netz, insbesondere dem Verbinden von Teilnetzen bei einem Netzwiederaufbau, eine Stabilisierung des Netzes auch bei hohem Anteil umrichtergeführter Erzeugungseinheiten im Netz ermöglicht. Zumindest soll zu bisher bekannten Lösungen eine Alternativlösung vorgeschlagen werden.

Die Erfindung bezieht sich auf ein Verfahren zum Einspeisen elektrischer Leistung an einem Netzanschlusspunkt in ein elektrisches Versorgungsnetz gemäß Anspruch 1 sowie ein Windenergiesystem, dass dazu eingerichtet ist, als umrichtergeführte Erzeugungseinheit elektrische Leistung an einem Netzanschlusspunkt in ein elektrisches Versorgungsnetz einzuspeisen, gemäß Anspruch 20. Vorteilhafte Ausführungsformen sind in den abhängigen Ansprüchen definiert.

Das elektrische Versorgungsnetz weist dabei eine Netzfrequenz auf.

Dabei ist das Einspeisen elektrischer Leistung in Abhängigkeit einer Steuerfunktion vorgesehen, wobei die elektrische Leistung Wirk- und Blindleistung umfassen kann. Es wird also vorgeschlagen, Wirk- und/oder Blindleistung in Abhängigkeiten einer Steuerfunktion einzuspeisen. Besonders kommt in Betracht, dass die Steuerfunktion einen Zusammenhang zwischen der eingespeisten Leistung und einem Zustand im elektrischen Versorgungsnetz herstellt. Ein solcher Zustand des elektrischen Versorgungsnetzes kann eine Spannungshöhe, Spannungsänderung, Frequenzhöhe, Frequenzänderung oder auch Signal eines Netzbetreibers sein, das bspw. einen Leistungsbedarf oder Leistungsüberangebot angeben kann, um nur einige Beispiele zu nennen.

Es wird dann vorgeschlagen, dass als Steuerfunktion zwischen einer Normalsteuerfunktion und wenigstens einer zur Normalsteuerfunktion verschiedenen Frequenzhaltesteuerfunktion ausgewählt werden kann. Die Normalsteuerfunktion wird ausgewählt, wenn erkannt wurde, dass das elektrische Versorgungsnetz in einem Normalzustand arbeitet. Ein solcher Normalzustand ist hierbei ein Zustand des elektrischen Versorgungsnetzes, in dem die umrichtergeführten Erzeugungseinheiten und auch andere Erzeugungseinheiten im elektrischen Versorgungsnetz im Wesentlichen so arbeiten, dass sie elektrische Leistung zur Versorgung der Verbraucher ins Netz einspeisen, ohne dass Besonderheiten wie ein Netzwiederaufbau zu beachten wären. In dem Normalzustand können aber auch Schwankungen der Netzfrequenz oder Schwankungen der Spannung im elektrischen Versorgungsnetz auftreten, auch in einem Maße, dass die umrichtergeführten Erzeugungseinheiten darauf reagieren müssen. Die Normalsteuerfunktion kann somit auch beinhalten, bspw. auf einen Anstieg der Netzfrequenz mit einer Reduzierung der eingespeisten Wirkleistung zu reagieren, um nur ein Beispiel zu nennen.

Die Frequenzhaltesteuerfunktion wird ausgewählt, wenn ein Betriebszustand einer Frequenzruhe vorliegt oder vorbereitet wird. Ein solcher Betriebszustand einer Frequenzruhe ist ein Betriebszustand des elektrischen Versorgungsnetzes, in dem die Netzfrequenz auf einem konstanten Wert zu halten ist. Grundsätzlich kann dies auch bei einem Netzabschnitt vorkommen, der nicht oder in dem Moment nicht Teil des elektrischen Versorgungsnetzes ist. Grundsätzlich ist dieser Betriebszustand der Frequenzruhe aber ein Betriebszustand des elektrischen Versorgungsnetzes.

Ein solcher Betriebszustand der Frequenzruhe kann dabei durch einen Betreiber des elektrischen Versorgungsnetzes, der als auch Netzbetreiber bezeichnet wird, vorgegeben werden, oder durch eine andere zentrale Steuereinheit. Der Netzbetreiber kann insoweit auch in Vorbereitung einer von ihm geplanten Situation, in der er den Betriebszustand der Frequenzruhe benötigt, eine entsprechende Information an die umrichtergeführte Erzeugungseinheit geben. Dadurch kann er auch schon in Vorbereitung eines solchen Betriebszustandes die Frequenzhaltesteuerfunktion auswählen bzw. auswählen lassen.

Der Betriebszustand der Frequenzruhe ist dabei ein Betriebszustand, in dem die Netzfrequenz auf einen konstanten Wert zu halten ist. Grundsätzlich ist natürlich immer für ein elektrisches Versorgungsnetz eine im Wesentlichen konstante Netzfrequenz vorzusehen, die aber in gewissen Grenzen schwanken kann und auch schwanken darf. Besonders umrichtergeführte Erzeugungseinheiten, besonders wenn sie im sog. Netzparallelbetrieb arbeiten können, passen sich normalerweise an diese Frequenz an. Das bedeutet, dass sie die Netzfrequenz und im Übrigen auch die zugehörige Phase ständig erfassen und ihre Leistung mit entsprechender Frequenz und Phase zum Einspeisen daran anpassen.

Dieses Verhalten ist insoweit auch das Verhalten der Normalsteuerfunktion. Und wenn dieses Verhalten gefordert ist, liegt insoweit auch der Normalzustand vor.

In dem Betriebszustand der Frequenzruhe soll stattdessen aber die Netzfrequenz auf einem konstanten Wert gehalten werden und das kann bedeuten, dass auch die umrichtergeführte Erzeugungseinheit nicht versucht, einer kontinuierlich erfassen Netzfrequenz nachzuführen, sondern mit einem festen Frequenzwert einzuspeisen, oder zumindest einen besonders hohen Aufwand zum Halten der Frequenz betreibt. Dagegen abgrenzend kann der Normalzustand im Wesentlichen alle Betriebszustände bezeichnen, die nicht den Betriebszustand der Frequenzruhe betreffen.

Vorzugsweise wird vorgeschlagen, dass die Frequenzhaltesteuerfunktion die Leistung wenigstens in Abhängigkeit einer Netzfrequenz des elektrischen Versorgungsnetzes so steuert, dass die Netzfrequenz gestützt wird, wobei die Netzhaltesteuerfunktion so ausgebildet und/oder parametriert ist, dass sie die Netzfrequenz stärker stützt, als die Normalsteuerfunktion die Netzfrequenz stützt.

Die Normalsteuerfunktion kann, was oben bereits erwähnt wurde, eine frequenzabhängige Regelung bzw. Steuerung aufweisen, wie bspw. eine frequenzabhängige Leistungssteuerung, wobei nachfolgend grundsätzlich eine Steuerung oder Steuerfunktion auch eine Regelung bzw. Regelungsfunktion beinhalten kann. Eine solche Steuerung sieht somit eine Reaktion für eine Frequenzänderung der Netzfrequenz vor, die dieser Frequenzänderung entgegenwirken soll. Ein wichtiges Beispiel hierfür ist, bei einer Frequenzerhöhung die eingespeiste Leistung zu verringern und bei einer Frequenzverringerung die eingespeiste Leistung zu erhöhen. Dies wirkt der erfassten Frequenzänderung oder des erfassten zu hohen oder zu niedrigen Frequenzwertes, entgegen. Das ist üblicherweise bereits für die Normalsteuerfunktion vorgesehen.

Für die Frequenzhaltesteuerfunktion wird nun vorgesehen, dass dieses Steuerverhalten noch stärker gewählt wird. Im einfachsten Fall kann dies eine Erhöhung eines Verstärkungsfaktors bedeuten bzw. eine Erhöhung der Steilheit einer Regelungsstatik. Ist bspw. bei der Normalsteuerfunktion für einen Frequenzabfall von 0,1 Prozent eine Leistungserhöhung von 5 Prozent vorgesehen, so kann bei der Frequenzhaltesteuerfunktion dafür eine Erhöhung der eingespeisten Leistung um 20 Prozent vorgesehen sein, um ein anschauliches Beispiel zu nennen.

Es kommt aber auch in Betracht, dass eine solche frequenzabhängige Steuerfunktion, nämlich eine Steuerfunktion zum Halten der Netzfrequenz, ganz grundsätzlich anders arbeitet. Bspw. kann bei der Normalsteuerfunktion ein Totbandbereich vorgesehen sein, der für geringe Abweichungen der Netzfrequenz von einer Netznennfrequenz gar keine Reaktion vorsieht, wohingegen für die Frequenzhaltesteuerfunktion vorgesehen sein kann, bei jeglicher Frequenzänderung einzugreifen. Für die Frequenzhaltesteuerfunktion kann auch vorgesehen sein, zur Frequenzstützung den aktuellen, oder einen von extern vorgegebenen, Frequenzwert als Basis zugrundezulegen, der von der Netznennfrequenz abweichen kann, um ein weiteres Beispiel zu nennen.

Besonders ist, nicht nur für diese Ausführungsform, bei der Frequenzhaltesteuerfunktion das Halten der Netzfrequenz auf einem konstanten Wert das vorrangige Regelungsziel.

Das Auswählen der Frequenzhaltesteuerfunktion kann somit auch beinhalten bzw. die Frequenzhaltesteuerfunktion kann beinhalten, dass andere netzzustandsabhängige Steuerungen geschwächt werden oder sogar kurzzeitig ausgesetzt werden. Bspw. kann die Normalsteuerfunktion auch eine spannungsabhängige Blindleistungseinspeisung vorsehen, die eine Blindleistung in Abhängigkeit der Spannung am Netzanschlusspunkt einspeist bzw. verändert. Für die Frequenzhaltesteuerfunktion kann dafür vorgesehen sein, dass diese spannungsabhängige Blindleistungseinspeisung ausgesetzt wird. Dadurch kann erreicht werden, dass die volle Steuerungsfähigkeit der umrichtergeführten Erzeugungseinheit der Frequenzstützung zur Verfügung steht. Besonders kann die Fähigkeit des Steuerungseingriffs jeder umrichtergeführter Erzeugungseinheit durch die Amplitude, im Sinne eines Effektivwerts, des eingespeisten Stroms begrenzt sein. Durch eine Blindleistungseinspeisung und damit eine Einspeisung eines Blindstroms kann somit der mögliche Anteil eines Wirkstroms begrenzt sein, was im Ergebnis auch die Wirkleistung begrenzt. Dies kann somit während der Frequenzhaltesteuerfunktion umgangen werden, indem in dem Moment auf eine Blindleistungseinspeisung verzichtet wird und der gesamte einspeisbare Strom Wirkstrom sein kann, um ein Beispiel zu nennen.

Eine solche Frequenzhaltesteuerfunktion bzw. ein solcher Betriebszustand der Frequenzruhe wird besonders für das Zusammenschalten zweier getrennter Teilnetze des elektrischen Versorgungsnetzes benötigt. Wenn diese beiden Teilnetze zusammengeschaltet werden, ist es besonders wichtig, dass diese dann dieselbe Netzfrequenz aufweisen. Dabei ist ein solcher Vorgang des Zusammenschaltens zweier solcher Netzabschnitte vergleichsweise kurz. Es kann somit ausreichend sein, auf ansonsten erforderliche Steuerungen des elektrischen Versorgungsnetzes zu verzichten bzw. diese in den Hintergrund zu schieben, und für den kurzen Vorgang des Zusammenschaltens der beiden getrennten Netzabschnitte vorrangig eine Frequenzstützung vorzusehen. Umrichtergeführte Erzeugungseinheiten können dies durch die vorgeschlagene Lösung unterstützen. Die Unterstützung wird natürlich besonders dadurch effizient, dass möglichst viele und möglichst leistungsstarke umrichtergeführte Erzeugungseinheiten in dem betreffenden Bereich des elektrischen Versorgungsnetzes wie vorgeschlagen arbeiten.

Es wurde auch erkannt, dass diese Stabilisierung der Netzfrequenz nicht nur durch vergleichsweise träge laufende Großkraftwerke, also direkt gekoppelte Synchrongeneratoren erreicht werden kann, sondern dass stattdessen die Fähigkeit einer schnellen Regelung umrichtergeführte Erzeugungseinheiten durch entsprechende Parametrierung bzw. durch Auswahl einer entsprechenden Frequenzhaltesteuerfunktion einen guten Beitrag leisten können. Dazu brauchen auch beteiligte, gleichwohl dezentral verteilte umrichtergeführte Erzeugungseinheiten nicht im Detail koordiniert gesteuert zu werden. Es kann ausreichen, dass die umrichtergeführten Erzeugungseinheiten auf das Vorgeschlagene, auf den Betriebszustand der Frequenzruhe angepasste Steuerverhalten umschalten.

Gemäß einer Ausführungsform wird vorgeschlagen, dass die Frequenzhaltesteuerfunktion eine Emulation eines Verhaltens einer Synchronmaschine mit einer virtuellen rotierenden Schwungmasse mit einem Trägheitsmoment beinhaltet. Dazu wird vorgeschlagen, dass die Leistung mit einer Frequenz eingespeist wird, die proportional zu einer Drehzahl der virtuellen rotierenden Schwungmasse vorgegeben wird. Vorzugsweise ist das virtuelle Trägheitsmoment einstellbar. Besonders ist eine rotierende Schwungmasse in einer direkt gekoppelten Synchronmaschine der Grund für das vergleichsweise träge Verhalten dieser Synchronmaschine und damit das vergleichsweise träge Verhalten der von dieser Synchronmaschine erzeugten Einspeisefrequenz.

Dieser Zusammenhang wird hier zugrundegelegt, wobei statt einer tatsächlich rotierenden Schwungmasse eine virtuell rotierende Schwungmasse mit einem virtuellen Trägheitsmoment gewählt wird. Dazu kann bspw. in einem Rechenprogramm ein Drehmoment, das proportional zu einer Leistungsdifferenz sein kann, kontinuierlich zu einer Frequenz aufintegriert werden. Die Leistungsdifferenz kann einer Änderung der eingespeisten Leistung entsprechen.

Die drehmomentabhängige Frequenzänderung hängt somit von der Integrationszeitkonstante ab und die entspricht der Inversen des virtuellen Trägheitsmomentes. Je größer das virtuelle Trägheitsmoment gewählt wird, umso kleiner ist also die Integrationszeitkonstante und umso weniger oder langsamer ändert sich somit die Frequenz. Dadurch kann also ein Konstanthalten der Frequenz erreicht werden. Besonders wird hierbei die Leistung mit einer Frequenz eingespeist, die durch die Drehzahl der virtuellen Schwungmasse vorgegeben wird. Es wird hier also nicht die Leistung einfach in ihrer Frequenz der Frequenz im Netz nachgeführt, sondern die Frequenz, mit der eingespeist wird, kann zumindest teilweise auf ihren Wert festgehalten werden.

Vorzugsweise ist das virtuelle Trägheitsmoment einstellbar und für die Frequenzhaltesteuerfunktion wird ein größeres virtuelles Trägheitsmoment eingestellt, als für die Normalsteuerfunktion. Dabei ist zu beachten, dass durch das zumindest teilweise Festhalten der Frequenz beim Einspeisen der Leistung die Leistung sich ändern kann und dadurch Einfluss auf die virtuelle Drehzahl und damit die eingespeiste Frequenz haben kann.

Sofern das virtuelle Trägheitsmoment einen geringen Wert aufweist, wird somit die Frequenz nur schwach festgehalten, was im Ergebnis zu einer guten Frequenznachführung führt, was im Normalzustand vorgesehen ist bzw. was einem Verhalten der Normalsteuerfunktion entsprechen kann. Durch das Erhöhen des virtuellen Trägheitsmoments, besonders durch ein signifikantes Erhöhen des virtuellen Trägheitsmoments wird insoweit die Frequenz stärker festgehalten und sie kann dabei so stark festgehalten werden, dass dieses Festhalten der Frequenz dominiert und insoweit eine starke Frequenzstützung erreicht wird.

Vorzugsweise ist das virtuelle Trägheitsmoment der Frequenzhaltesteuerfunktion im Vergleich zur Normalsteuerfunktion wenigstens doppelt so groß. Vorzugsweise ist es wenigstens 5-mal so groß und insbesondere wird vorgeschlagen, dass es wenigstens 10-mal so groß ist. Es werden somit solche signifikanten Erhöhungen des virtuellen Trägheitsmoments vorgeschlagen, wodurch die Frequenzstützung dominant wird. Dadurch kann der Betriebszustand der Frequenzruhe gut gestützt werden.

Gemäß einer Ausführungsform wird vorgeschlagen, dass

- zum Einspeisen der Leistung ein Strom mit einer Frequenz und einer Phase eingespeist wird,
- die Frequenz und optional die Phase des eingespeisten Stroms durch eine mit einer virtuellen Drehzahl $\omega_v$ rotierende virtuelle Masse vorgegeben wird,
- die rotierende virtuelle Masse ein einstellbares virtuelles Trägheitsmoment $J_v$ aufweist, so dass in der rotierenden Masse eine virtuelle kinetische Energie $E_v$ gespeichert ist, nach der Formel:

$$E_v = 1/2 J_v \, \omega_v^2$$

- wobei die Frequenz f des eingespeisten Stroms proportional zur virtuellen Drehzahl $\omega_v$ ist, insbesondere mit dem Zusammenhang: $\omega_v = 2\pi f$, und
- die virtuelle kinetische Energie in Abhängigkeit einer Leistungsabweichung verändert wird, wobei die Leistungsabweichung ein Überschreiten der eingespeisten Wirkleistung über eine Anfangswirkleistung oder über eine vorgegebene Wirkleistung beziffert, und
- die Veränderung der virtuellen kinetischen Energie insbesondere so erfolgt, dass sie um die über die Zeit integrierte Abweichungsleistung verändert wird und dabei entsprechend ihre virtuelle Drehzahl verändert, nämlich entsprechend der Formel

$$E_v = 1/2 J_v \, \omega_v^2.$$

Diese Ausführungsform ist somit eine Möglichkeit, die eingespeiste Frequenz in Abhängigkeit einer rotierenden virtuellen Masse einzustellen bzw. mit entsprechender Frequenz Leistung einzuspeisen. Eine Leistungsabweichung führt hierbei zu einer Veränderung der virtuellen kinetischen Energie, woraus sich eine Änderung der Drehzahl und damit eingespeisten Frequenz ergeben kann. Die Trägheit solcher Frequenzänderungen lässt sich dabei einstellen, indem das virtuelle Trägheitsmoment eingestellt wird. Je größer es gewählt wird, umso träger ist dieses System und umso stärker wird die Frequenz gehalten.

Gemäß einer Ausführungsform wird vorgeschlagen, dass

- eine Ist-Frequenz erfasst wird, insbesondere am Netzanschlusspunkt,
- eine Frequenzabweichung als Abweichung der erfassten Ist-Frequenz von einer Referenzfrequenz bestimmt wird,
- die Frequenzhaltesteuerfunktion eine einzuspeisende Leistung, insbesondere Wirkleistung, in Abhängigkeit der Frequenzabweichung über eine Reglerfunktion mit einstellbarer Reglerverstärkung vorgibt und
- die Reglerverstärkung so vorgegeben wird, dass die Netzfrequenz stärker gestützt wird als durch die Verwendung der Normalsteuerfunktion.

Gemäß dieser Ausführungsform wird das vorrangige Regelungsziel, die Netzfrequenz möglichst auf einem konstanten Wert zu halten, durch eine entsprechende Anpassung einer Reglerverstärkung realisiert. Hierbei liegt eine Leistungseinspeisung in Abhängigkeit der Frequenzabweichung vor. Diese Abhängigkeit wird über die Reglerfunktion mit einstellbarer Reglerverstärkung realisiert. Für die Frequenzhaltesteuerfunktion wird entsprechend dem Betrage nach eine sehr große Reglerverstärkung ausgewählt, so dass schon bei einer geringen Frequenzabweichung eine große Änderung der Wirkleistungseinspeisung bewirkt wird.

Besonders ist hier vorgesehen, dass die Frequenzhaltesteuerfunktion und die Normalsteuerfunktion die gleiche Reglerfunktion implementiert hat, mit der die einzuspeisende Leistung in Abhängigkeit der Frequenzabweichung vorgegeben wird. Bei der Frequenzhaltesteuerfunktion ist dabei die Reglerverstärkung dem Betrage nach aber größer, insbesondere signifikant größer, als bei der Normalsteuerfunktion und/oder eine Reglerzeitkonstante ist kleiner insbesondere signifikant kleiner als bei der Normalsteuerfunktion. Somit können einfach über die Einstellung dieser Reglerverstärkung die Frequenzstützung verbessert werden, insbesondere kann sie hierdurch durch eine entsprechend stark veränderte Reglerverstärkung zum vorrangigen Regelungsziel gemacht werden.

Vorzugsweise ist vorgesehen, dass die Normalsteuerfunktion auch eine einzuspeisende Leistung, insbesondere Wirkleistung, in Abhängigkeit der Frequenzabweichung über eine Reglerfunktion mit einstellbarer Reglerverstärkung vorgibt, wobei die Reglerverstärkung der Frequenzhaltesteuerung im Vergleich zur Normalsteuerfunktion wenigstens auf einen 2-fachen, vorzugsweise wenigstens auf einen 5-fachen und insbesondere wenigstens auf einen 10-fachen Wert eingestellt wird.

Gemäß einer Ausgestaltung wird für die Frequenzhaltesteuerfunktion ein Integralanteil im Regler vorgeschlagen, um eine stationäre Genauigkeit der Frequenz zu erreichen. Wenn bereits bei der Normalsteuerfunktion ein Integralanteil vorhanden ist, wird für die Frequenzhaltesteuerfunktion vorgeschlagen, den Integralanteil zu vergrößern, insbesondere wenigstens zu verdoppeln.

Für die Frequenzhaltesteuerung ist somit wenigstens ein doppelter Wert der Reglerverstärkung vorgesehen, insbesondere wenigstens 5-fach und insbesondere wenigstens 10-fach. Dadurch wird die Reglerverstärkung der Frequenzhaltesteuerung signifikant gegenüber der Reglerverstärkung der Normalsteuerfunktion erhöht. Die Reglerverstärkung soll demnach also signifikant erhöht werden.

Gemäß einer weiteren Ausführungsform wird vorgeschlagen, dass die Frequenzhaltesteuerung nur für einen vorbestimmten Frequenzruhezeitraum verwendet wird und der vorbestimmte Frequenzruhezeitraum weniger als 1 Minute beträgt, vorzugsweise weniger als 30 Sekunden und insbesondere weniger als 15 Sekunden.

Der Frequenzhaltersteuerung wird somit für einen sehr kurzen Zeitraum nur vorgesehen, nämlich insbesondere weniger als eine Minute, weniger als 30 Sekunden oder sogar weniger als 15 Sekunden. Hierdurch kann besonders eine beschriebene Schalthandlung unterstützt werden bzw. das Netz während einer solchen Schalthandlung gestützt werden. Dadurch, dass diese Frequenzhaltesteuerfunktion nur kurz angewendet wird, kann dafür ein sehr großer Aufwand für das für diesen kurzen Zeitraum vorrangige Regelungsziel der Frequenzkonstanthaltung getrieben werden. Besonders können ggf. auch große Energiemengen, wie bspw. aus der Schwungmasse besonders des aerodynamischen Rotors der Windenergieanlage, bzw. der mehreren Windenergieanlagen im Falle eines Windparks, verwendet werden. Eine solche kinetische Energie einer Schwungmasse kann schnell aufgebraucht sein, kann aber für den genannten kurzen Zeitraum, in dem diese extreme Regelungsfunktion benötigt wird, ausreichend sein.

Vorzugsweise wird noch vorgeschlagen, dass die umrichtergeführte Erzeugungseinheit wenigstens eine Windenergieanlage mit einem aerodynamischen Rotor umfasst oder ist, die Frequenzhaltesteuerung zur Stützung der Netzfrequenz mehr Leistung aufwendet als die Normalsteuerfunktion, so dass für einen bzw. den Frequenzruhezeitraum zusätzliche Leistung in das elektrische Netz eingespeist werden kann, oder aus diesem entnommen werden kann und die zusätzliche Leistung, oder ein Teil davon, aus kinetischer Energie des Rotors genommen wird, oder als kinetische Energie in den Rotor eingespeichert wird.

Hierdurch wird Energie der Schwungmasse des aerodynamischen Rotors der Windenergieanlage bzw. der mehreren Windenergieanlagen im Falle eines Windparks verwendet und damit das Potenzial bereitstellbarer Energie für die Frequenzhaltesteuerung signifikant erhöht. Besonders wird es hierdurch auch möglich, etwaige erforderliche Stützleistung, die über die in dem Moment aus dem Wind erhältliche Leistung hinausgeht, bereitzustellen.

Vorzugsweise ist vorgesehen, dass bei einem Umschalten von der Normalsteuerfunktion auf die Frequenzhaltesteuerfunktion der in dem Moment aktuelle Wert der erfassten Netzfrequenz oder ein Mittelwert einer erfassten Frequenz als Frequenzsollwert ausgewählt wird, insbesondere dass der so ausgewählte Frequenzsollwert als konstanter Wert für die gesamte Dauer eines bzw. des Frequenzruhezeitraums festgelegt wird, und dass insbesondere für die gesamte Dauer des Frequenzruhezeitraums mit der Frequenzhaltesteuerfunktion auf diesen Frequenzsollwert geregelt wird.

Somit wird hier vorgeschlagen, den momentan erfassten Frequenzwert, was auch einen Mittelwert der Frequenz beinhalten kann oder einen anderweitig gefilterten Wert der Frequenz, dauerhaft für diesen Zeitraum der vorrangigen Frequenzstützung als Wert zugrundezulegen. Die Regelung versucht diesen Frequenzwert zu halten und kann dadurch eine Stabilisierung der Netzfrequenz erreichen. Besonders wird hier die erfasste Frequenz der Netzfrequenz am Netzanschlusspunkt verwendet. Jedenfalls wird erreicht, dass die aktuelle Frequenz im Wesentlichen auf ihrem aktuellen Wert gehalten wird. Besonders kann durch ein Signal durch den Netzbetreiber, oder ein anderes Signal, eine Umschaltung auf die Frequenzhaltesteuerfunktion erfolgen und dadurch wird die in dem Moment aktuelle Frequenz festgehalten.

Besonders ist dies ein wirksamer Vorschlag, wenn möglichst viele, im Idealfall alle, umrichtergeführten Einspeiseeinheiten des betroffenen Netzabschnitts eine solche Regelung durchführen. In diesem Fall kann die Frequenz auf diesem letzten Wert gehalten werden. Besonders in dem Fall, in dem das betreffende Teilnetz, an das auch die betrachtete umrichtergeführte Einspeiseeinheit angeschlossen ist, keinen direkt gekoppelten Synchrongenerator umfasst, können hierdurch alle beteiligten umrichtergeführten Einspeiseeinheiten auf denselben auszuregelnden Frequenzwert eingestellt werden. Dazu bedarf es keines gemeinsamen Sollwertes, der an alle betroffenen umrichtergeführten Einspeiseeinheiten übertragen wird, sondern nur eines gemeinsamen Zeitsignals zum Starten. Entsprechend wird vorzugsweise auch vorgeschlagen, dass eine zentrale Steuerung ein gemeinsames Startsignal an mehrere umrichtergesteuerte Erzeugungseinheiten sendet.

Dadurch, dass dieser Frequenzwert für den gesamten Zeitraum der vorgesehenen Frequenzstützung festgelegt wird, ergibt sich dadurch ein einheitlicher stabiler Frequenzsollwert als Regelungssollwert für alle betroffenen umrichtergesteuerten Erzeugungseinheiten.

Vorzugsweise ist das elektrische Versorgungsnetz in Teilnetze unterteilt und die Frequenzhaltesteuerfunktion wird ausgewählt, wenn solche Teilnetze verbunden werden sollen. Besonders für einen solchen Fall des Verbindens solcher Teilnetze, was besonderes in dem Fall eines Netzwiederaufbaus relevant sein kann, wird somit die Frequenz auch durch die umrichtergeführten Erzeugungseinheiten festgehalten und die beiden Teilnetze können bei möglichst kontanter Frequenz verbunden werden.

Gemäß einer weiteren Ausführungsform wird vorgeschlagen, dass zusätzlich eine Frequenzanpasssteuerfunktion vorgesehen ist, um die Frequenz eines Teilnetzes bzw. eines der Teilnetze an die Frequenz eines zweiten Teilnetzes bzw. eines zweiten der Teilnetze anzugleichen, und in Vorbereitung des Betriebszustands einer Frequenzruhe zunächst nach der Normalsteuerfunktion die Frequenzanpasssteuerfunktion ausgewählt wird, um die Angleichung der Frequenzen durchzuführen und anschließend, wenn die Frequenzen angeglichen sind, die Frequenzhaltesteuerfunktion auszuwählen.

Somit ist eine Frequenzanpasssteuerfunktion vorgesehen. Diese Frequenzanpasssteuerfunktion soll zumindest die Frequenz des einen Teilnetzes an die Frequenz des anderen Teilnetzes anpassen. Vorzugsweise ist eine solche Frequenzanpasssteuerfunktion in jedem der Teilnetze vorgesehen, so dass diese sich gegenseitig annähern. Für die Steuerung einer umrichtergeführten Erzeugungseinheit bedeutet dies aber, dass diese Frequenz des Teilnetzabschnitts, an dem sie angeschlossen ist, der Frequenz des anderen Teilnetzes angleicht, nämlich dessen Teilnetzes, an das angeschlossen werden soll.

Die Frequenzanpasssteuerfunktion kann bspw. so arbeiten, dass sie einen Frequenzwert von dem anderen Teilnetz erhält, oder dass beide Teilnetze von einem für beide Teilnetze zuständigen Netzbetreiber ein gemeinsames Frequenzsignal bekommen. Die Frequenzanpasssteuerfunktion wird somit besonders vorgesehen, wenn die Frequenzen beider zu verbindenden Teilnetze in dem Moment nicht identisch sind. Dann wird vorzugsweise eine Frequenz zwischen den aktuellen Frequenzen beider Teilnetze ausgewählt. Es kommt aber auch in Betracht, eine andere Frequenz als Zielfrequenz vorzusehen, bspw. die Netznennfrequenz. Eine Netznennfrequenz braucht aber nicht ausgewählt zu werden, wenn bspw. die Frequenzen beider Teilnetze deutlich unter dieser Netznennfrequenz liegen. Die Frequenzanpasssteuerfunktion kann sich somit bspw. von der Normalsteuerfunktion und der Frequenzhaltesteuerfunktion dadurch unterscheiden, dass sie einen externen Frequenzwert vorgegeben bekommt, der wiederum nicht dem aktuellen Frequenzwert der Netzfrequenz entspricht.

Es wird somit die umrichtergesteuerte Erzeugungseinheit zunächst im Normalzustand bestrieben.

Dann soll die Verbindung zweier Teilnetze vorgenommen werden und es wird dann zunächst die Frequenzanpasssteuerfunktion ausgewählt, um die Frequenzen beider Netze anzugleichen. Ist dies erfolgreich gelungen, kann schließlich die Frequenzhaltesteuerfunktion ausgewählt werden.

Vorzugsweise wird vorgeschlagen, dass nach dem Auswählen der Frequenzhaltesteuerfunktion wenigstens die beiden Teilnetze miteinander verbunden werden und insbesondere die Schritte in Vorbereitung des Betriebszustands einer Frequenzruhe zunächst nach der Normalsteuerfunktion die Frequenzanpasssteuerfunktion auszuwählen, anschließend, wenn die Frequenzen angeglichen sind, die Frequenzhaltesteuerfunktion auszuwählen und optional nach dem Auswählen der Frequenzhaltesteuerfunktion wenigstens die beiden Teilnetze miteinander zu verbinden, automatisiert durchgeführt werden.

Nachdem die Frequenzhaltesteuerfunktion ausgewählt wurde, können dann also beide Teilnetze verbunden werden. Dies sollte möglichst auch bald erfolgen, damit die Frequenzhaltesteuerfunktion nicht zu lange aktiv ist.

Um auch eine zügige Durchführung zu gewährleisten, wird somit vorgeschlagen, die genannten Schritte automatisiert durchzuführen. Letztlich sind die zugrundeliegenden Kriterien mit einem Computer auswertbar. Vorzugsweise wird eine solche automatisierte Steuerung durch eine zentrale Steuerung, wie bspw. einen Netzbetreiber, durchgeführt. Es wird also eine zentrale Steuerung vorgeschlagen, die für viele umrichtergeführte Erzeugungseinheiten zuständig ist. Gleichwohl ist besonders der Koordinierungsaufwand und die Notwendigkeit der Datenübertragung einer solchen zentralen Steuereinheit zu den einzelnen umrichtergeführten Erzeugungseinheiten vergleichsweise gering. Grundsätzlich braucht eine solche zentrale Steuereinheit nur jeweils Umschaltsignale vorzugeben, nämlich zunächst ein Umschaltsignal zum Umschalten von der Normalsteuerfunktion auf die Frequenzanpasssteuerfunktion, dann von der Frequenzanpasssteuerfunktion auf die Frequenzhaltesteuerfunktion und schließlich kann sie ein Signal zum Verbinden der Teilnetze geben bzw. dieses Verbinden dann selbst durchführen.

Damit ist auf vorteilhafte Weise ein Verbinden oder Wiederverbinden von zwei getrennten Teilnetzes möglich, auch bei einem hohen Grad umrichtergesteuerter Erzeugungseinheiten.

Besonders weil die umrichtergesteuerten Erzeugungseinheiten regelmäßig über einige Steuerfunktionen und Steuereinrichtungen verfügen, die häufig von extern angesteuert werden können, oder von extern zumindest Informationen empfangen können, ist ein solcher Vorgang des Verbindens von Teilnetzen hierbei auch gut automatisierbar durchführbar.

Gemäß einer Ausführungsform wird vorgeschlagen, dass eine Übergangsfunktion vorgesehen ist, zum Vorgeben oder Steuern einer Änderung von der Frequenzhaltesteuerfunktion zur Normalsteuerfunktion, und/oder von der Normalsteuerfunktion zur Frequenzhaltesteuerfunktion, wobei vorzugsweise die Übergangsfunktion jeweils zum Ändern von Einstellungen, insbesondere von Parametern jeweils eine Zeitkennlinie vorgibt, so dass sich die Einstellungen bzw. Parameter entlang dieser Zeitkennlinie ändern können. Mit diesem Vorschlag kann auch erreicht werden, dass davon betroffene Netzregelungen den Änderungen gut folgen können.

Hier wurde besonders erkannt, dass nach dem Verbinden zweier getrennter Netzabschnitte die Frequenzhaltesteuerfunktion zwar nicht mehr benötigt wird, weil die Frequenz nicht mehr in besonderem Maße gehalten werden muss, dass aber direkt nach dem Verbinden das Netz noch störanfällig sein kann und ein hartes Umschalten von der Frequenzhaltesteuerfunktion zurück zur Normalsteuerfunktion die Stabilität des Netzes gefährden kann. Durch die Übergangsfunktion kann ein Übergang vorgegeben werden, um dieses harte Schalten zu vermeiden.

Eine solche Übergangsfunktion ist aber auch für das Wechseln von der Normalsteuerfunktion in die Frequenzhaltesteuerfunktion vorteilhaft. Zu dem Zeitpunkt arbeitet das Netz zwar recht stabil, dafür sind aber für die vorzubereitende Frequenzruhe bereits kleine Schwankungen unerwünscht. Die Übergangsfunktion kann somit in beide Richtungen verwendet werden, wobei sie vorzugsweise aber je Änderungsrichtung unterschiedlich parametriert wird.

Für die Änderung der Einstellungen insbesondere die Änderung der Parameter wird vorzugsweise jeweils eine Zeitkennlinie vorgegeben, so dass sich die Einstellungen bzw. Parameter jeweils entlang einer solchen Kennlinie ändern. Dadurch kann ihre Änderung vorgegeben werden und Sprünge können vermieden werden. Die Zeitkennlinie gibt den zeitlichen Verlauf des jeweiligen Wertes der Einstellung bzw. des Parameters an.

Grundsätzlich kann auch für einen Übergang von der Normalsteuerfunktion zur Frequenzanpasssteuerfunktion die Übergangsfunktion sinngemäß verwendet werden.

Vorzugsweise ist das Verfahren dadurch gekennzeichnet, dass die Übergangsfunktion für die Änderung einen Übergangszeitraum vorgibt, wobei der Zeitraum vorzugsweise im Bereich von 1 bis 10 Sekunden, insbesondere 2 bis 5 Sekunden liegt, und

- über den Übergangszeitbereich sich zwischen der Frequenzhaltesteuerfunktion und der Normalsteuerfunktion unterscheidende Einstellungen, zumindest Parameter, stetig, vorzugsweise streng monoton, insbesondere linear jeweils von ihrem jeweiligen Wert bei der Frequenzhaltesteuerfunktion zu ihrem jeweiligen Wert bei der Normalsteuerfunktion verändern, bzw. umgekehrt, und/oder
- dass für den Übergangszeitraum für Änderungen von Blindleistungsabgaben und/oder von Wirkleistungsabgaben der umrichtergeführten Erzeugungseinheit Grenzgradienten vorgegeben werden, so dass sich Blindleistungsabgaben und/oder Wirkleistungsabgaben, dem Betrage nach höchstens so schnell ändern, dass die Grenzgradienten nicht überschritten werden.

Es wird somit vorgeschlagen, dass sich Parameter von einem zum anderen Wert insbesondere linear verändern. Es kommt auch eine anderweitig streng monotone Änderung in Betracht, bspw. über eine Spline-Funktion mit Stützstellen. Eine solche lineare Veränderung oder die beispielhaft genannte Spline-Funktion sind jeweils Beispiele für eine Zeitkennlinie.

Jedenfalls soll zumindest keine sprunghafte Änderung vorgenommen werden. Eine solche nicht sprunghafte, durch die Übergangsfunktion vorgebbare Änderung kommt aber auch für andere Eigenschaften, wie auch unterschiedliche Strukturen in Betracht. Unterscheiden sich die Strukturen zwischen der Frequenzhaltesteuerfunktion und der Normalsteuerfunktion bspw. darin, dass die eine Struktur einen I-Anteil aufweist und die andere nicht, so kann der I-Anteil durch einen Übergangsgewichtungsfaktor hinzugenommen bzw. weggenommen werden, der sich von null bis eins bzw. umgekehrt verändert. Auf diese Art können grundsätzlich jegliche Strukturelemente ohne hartes Schalten hinzugenommen bzw. weggenommen werden.

Außerdem oder alternativ wird vorgeschlagen, Blindleistungsänderungen und/oder Wirkleistungsänderungen zu begrenzen. Das betrifft die Blindleistungsabgabe bzw. Wirkleistungsabgabe der umrichtergesteuerten Erzeugungseinheit, es kann aber grundsätzlich auch eine Blindleistungsaufnahme oder Wirkleistungsaufnahme durch die umrichtergesteuerte Erzeugungseinheit betreffen, also eine negative Abgabe.

Hier wurde besonders erkannt, dass durch die Frequenzhaltesteuerfunktion große Veränderungen der Blindleistungsabgabe und/oder der Wirkleistungsabgabe aufgetreten sein können. In der Normalsteuerfunktion würden diese Werte wieder zurück geregelt werden, was zu hohen Änderungen führen könnte, die so hoch sein könnten, dass sich Stabilitätsprobleme einstellen könnten. Das wird durch die Vorgabe von Grenzgradienten verhindert. Jeder Grenzgradient gibt somit eine maximal zulässige Änderung der Blindleistung bzw. Wirkleistung pro Zeit an. Die Werte der Grenzgradienten sind vorzugsweise für die Blindleistungsabgabe und die Wirkleistungsabgabe unterschiedlich.

Solche Grenzgradienten können aber auch für einen Wechsel von der Normalsteuerfunktion zur Frequenzhaltesteuerfunktion sinnvoll sein, denn die unterschiedlichen Steuerfunktionen können zu unterschiedlichen Blindleistungsabgaben und/oder Wirkleistungsabgaben führen und auch dann könnte eine zu schnelle Änderung für die Frequenzhaltesteuerfunktion ungünstig sein.

Der nicht sprunghafte Übergang der Eigenschaften, als auch die Vorgabe der Grenzgradienten können auch kombiniert werden, bspw. indem beide Vorschläge zugleich umgesetzt werden. Im Idealfall würden durch den nicht sprunghaften Übergang die Grenzgardienten gar nicht erreicht werden und könnten insoweit als zusätzliche Sicherheitsmaßnahme fungieren.

Dazu wird vorzugsweise auch vorgeschlagen, dass die Frequenzhaltesteuerfunktion und optional die Normalsteuerfunktion und ggf. die Frequenzanpasssteuerfunktion in Abhängigkeit wenigstens einer externen Anforderung, insbesondere von einem Netzbetreiber, ausgewählt wird, wobei vorzugsweise die Erzeugereinheit über eine Schnittstelle, insbesondere eine Datenschnittstelle, eine oder mehrere solcher externen Anforderungen empfangen kann.

Hierdurch ist eine vorteilhafte Koordination mehrerer umrichtergeführter Erzeugungseinheiten möglich. Außerdem kann hierdurch der Netzbetreiber die so ansteuerbaren umrichtergeführten Erzeugereinheiten für die Steuerung seines elektrischen Versorgungsnetzes einsetzen, insbesondere kann er sie hierbei auch für das oftmals kritische Verbinden zweier Teilnetze einsetzen.

Gemäß einer Ausführungsform wird vorgeschlagen, dass beim Auswählen der Frequenzhaltefunktion die umrichtergeführte Erzeugungseinheit von einem stromprägenden Betrieb auf einen spannungsprägenden Betrieb umschaltet, oder zumindest bei Verwendung mehrerer Umrichtereinheiten oder Wechselrichtereinheiten wenigstens eine oder mehrere dieser Umrichter- oder Wechselrichtereinheiten auf einen spannungsprägenden Betrieb umschaltet.

Es wird somit vorgeschlagen, für die Frequenzhaltefunktion einen spannungsprägenden Betrieb vorzusehen oder zumindest einige Umrichter oder Wechselrichter im spannungsprägenden Betrieb zu betreiben.

Dem liegt der Gedanke zugrunde, dass ein spannungsprägender Betrieb sehr viel schneller auf Abweichungen der Augenblickswerte der Spannung reagieren kann und damit sehr viel schneller auf kleinste Frequenzabweichungen reagieren kann, die sich nämlich in entsprechenden Spannungsabweichungen niederschlagen. Dazu muss nicht unbedingt die gesamte umrichtergeführte Erzeugereinheit in einen spannungsprägenden Betrieb umgeschaltet werden. Es kann bereits vorteilhaft sein, wenn wenigstens teilweise bzw. mehr als bei der Normalsteuerfunktion, ein spannungsprägender Betrieb vorgesehen ist. Selbst wenn die umrichtergeführte Erzeugungseinheit nur eine Windenergieanlage umfasst, kann auch in dieser Windenergieanlage eine Umschaltung nur einiger der verwendeten Umrichter oder Wechselrichter in einen spannungsprägenden Betrieb durchgeführt werden. Ähnliches gilt auch für einen Windpark, wenn der die umrichtergeführte Erzeugungseinheit bildet. Dann kann nämlich vorgesehen sein, dass einige der Windenergieanlagen im spannungsprägenden Betrieb arbeiten, oder dass auch dort in jeder Windenergieanlage mehrere Umrichter oder Wechselrichter vorhanden sind und jeweils in den Windenergieanlagen einige der Umrichter oder Wechselrichter auf spannungsprägenden Betrieb umschalten.

Erfindungsgemäß wird auch ein Windenergiesystem vorgeschlagen. Ein solches Windenergiesystem kann eine Windenergieanlage oder ein Windpark sein, der mehrere Windenergieanlagen umfasst. Ein solches Windenergiesystem ist dazu vorbereitet, als umrichtergeführte Erzeugungseinheit elektrische Leistung an einem Netzanschlusspunkt in ein elektrisches Versorgungsnetz einzuspeisen, das eine Netzfrequenz aufweist. Das Windenergiesystem umfasst

- eine Einspeiseeinheit zum Einspeisen elektrischer Leistung in Abhängigkeit einer Steuerfunktion, wobei die elektrische Leistung Wirk- und Blindleistung umfassen kann,

- eine Steuereinheit, in der die Steuerfunktion implementiert ist und die dazu vorbereitet ist, dass als Steuerfunktion zwischen einer Normalsteuerfunktion und wenigstens einer zur Normalsteuerfunktion verschiedenen Frequenzhaltesteuerfunktion ausgewählt werden kann, wobei die Steuereinheit dazu vorbereitet ist, dass

  - die Normalsteuerfunktion ausgewählt wird, wenn erkannt wurde, dass das elektrische Versorgungsnetz in einem Normalzustand arbeitet und

  - die Frequenzhaltesteuerfunktion ausgewählt wird, wenn ein Betriebszustand einer Frequenzruhe vorliegt oder vorbereitet wird, wobei ein Betriebszustand einer Frequenzruhe einen Betriebszustand besonders des elektrischen Versorgungsnetzes beschreibt, in dem die Netzfrequenz auf einem konstanten Wert zu halten ist.

Besonders ist somit dieses Windenergiesystem dazu vorbereitet, wenigstens ein vorstehend beschriebenes Verfahren einzusetzen bzw. umzusetzen. Ein solches Windenergiesystem kann vorzugsweise auch eine Speichereinrichtung zum Speichern elektrischer Energie aufweisen. Solche elektrische Energie kann dann ggf. von der Frequenzhaltesteuerfunktion verwendet werden. Besonders die Frequenzhaltesteuerfunktion kann kurzzeitig und kurzfristig eine vergleichsweise große Menge an Energie benötigen, um ihr Regelungsziel umzusetzen. Als Regelungsziel kann nämlich auch hier definiert werden, dass die Frequenzhaltung als Regelungsziel im Vordergrund steht. Ein solcher Energiespeicher braucht entsprechend auch nur so groß dimensioniert zu werden, dass er Energie für die Frequenzhaltefunktion und damit auch nur für einen kurzen Frequenzruhezeitraum bereitstellen kann. Vorzugsweise ist der Energiespeicher als Batterie oder Batteriebank ausgebildet und kann damit unmittelbar elektrische Energie speichern.

Gemäß einer Ausführungsform wird vorgeschlagen, dass eine Schnittstelle, insbesondere eine Datenschnittstelle, vorgesehen ist, um wenigstens eine Anforderung zum Auswählen einer Steuerfunktion zu empfangen. Damit kann über diese Datenschnittstelle bspw. von einem Netzbetreiber, oder anderer zentraler Steuereinheit, ein entsprechendes Signal empfangen werden.

Vorzugsweise ist das Windenergiesystem dazu vorbereitet, ein Verfahren gemäß wenigstens einer vorstehend beschriebenen Ausführungsform auszuführen.

Nachfolgend wird die Erfindung anhand von Ausführungsbeispielen exemplarisch unter Bezugnahme auf die begleitenden Figuren näher beschrieben.

Figur 1    zeigt eine Windenergieanlage in einer perspektivischen Darstellung.

Figur 2    zeigt einen Windpark in einer schematischen Darstellung.

Figur 3    zeigt schematisch zwei zu verbindende Netzabschnitte.

Figur 4    zeigt ein Beispiel für unterschiedliche Steuerfunktionen.

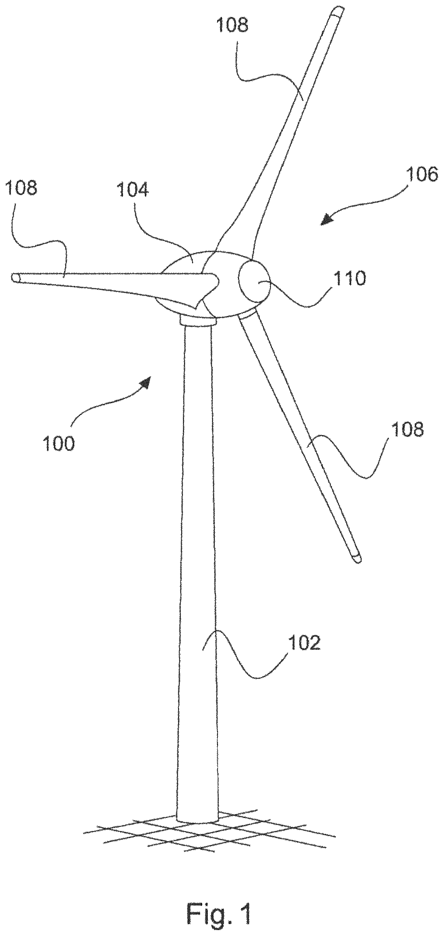

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

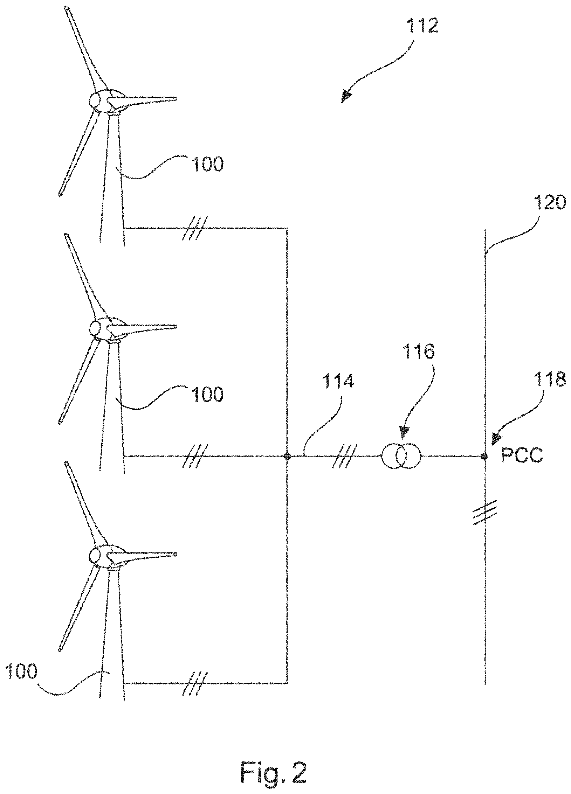

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

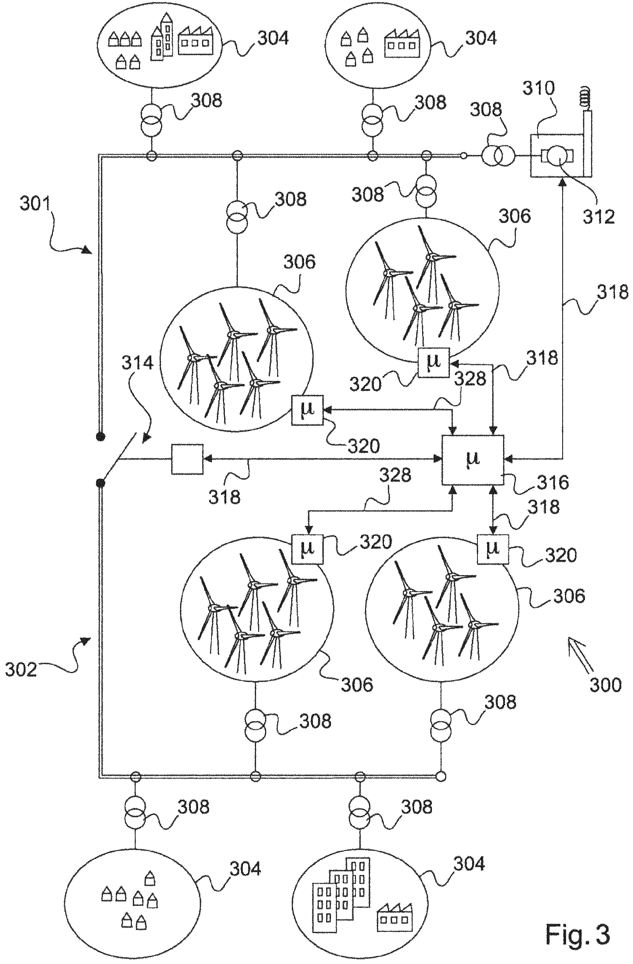

Figur 3 zeigt schematisch einen Ausschnitt eines elektrischen Versorgungsnetzes 300. Das elektrische Versorgungsnetz 300 der Figur 3 weist zumindest ein erstes und zweites Teilnetz 301 bzw. 302 auf. Jedes Teilnetz 301 und 302 weist einige als Ortschaften symbolisierte Verbraucher 304 auf, sowie Windparks 306.

Besonders die Verbraucher 304 als auch die Windparks 306 können sich in Details unterscheiden, worauf es hier weniger ankommt, so dass dennoch für alle Verbraucher 304 dasselbe Bezugszeichen verwendet wird. Gleiches gilt für die Windparks 306 und auch die Transformatoren 308, über die in das elektrische Versorgungsnetz 300 bzw. eines der Teilnetze 301, 302 eingespeist wird, bzw. über die aus dem elektrischen Versorgungsnetz 300 bzw. die Teilnetze 301, 302 Leistung von den Verbrauchern 304 entnommen wird. Für das erste Teilnetz 301 ist auch noch ein Großkraftwerk 310 dargestellt, das ebenfalls über einen Transformator 308 in das elektrische Versorgungsnetz 300, hier nämlich in das erste Teilnetz 301, einspeist. Das Großkraftwerk 310 weist dabei einen direkt mit dem elektrischen Versorgungsnetz 300 bzw. dem ersten Teilnetz 301 gekoppelten Synchrongenerator 312 auf, der hier nur angedeutet ist.

Figur 3 zeigt dabei den Zustand, bei dem das erste und das zweite Teilnetz 301, 302 voneinander getrennt sind, was durch den geöffnet dargestellten Kopplungsschalter 314 angezeigt wird.

Der Kopplungsschalter 314 ist mit einer Zentralsteuereinheit 316 verbunden, nämlich über eine Datenleitung 318, über die ein bidirektionaler Datenaustausch stattfinden kann. Insbesondere kann der Kopplungsschalter 314 an der Zentralsteuereinheit 316 seinen Zustand mitteilen, nämlich insbesondere ob er geöffnet oder geschlossen ist. Die Zentralsteuereinheit 316 kann den Kopplungsschalter 314 über die Datenleitung 318 einen Befehl zum Schließen übertragen.

Die Zentralsteuereinheit 316 ist über weitere Datenleitungen 318, die hier der Einfachheit halber jeweils dasselbe Bezugszeichen haben, mit den Windparks 306 verbunden. Die Windparks 306 stehen insoweit auch repräsentativ für andere umrichtergeführte Erzeugungseinheiten. Für den Datenaustausch ist neben der Datenleitung 318 an jedem Windpark 306 ein Parkrechner 320 vorgesehen. Zum Großkraftwerk 310 verläuft ebenfalls eine Datenleitung 318, um zwischen der Zentralsteuereinheit 316 und dem Großkraftwerk 310 Daten austauschen zu können.

Um nun die beiden Teilnetze 301 und 302 wieder zu verbinden, initiiert die Zentralsteuereinheit 316 eine Frequenzanpassungssteuerung. Das kann bspw. so erfolgen, dass der Befehl zum Verwenden einer Frequenzanpassungssteuerung nur an die Windparks 306 des zweiten Teilnetzes 302 gesendet wird, wenn das erste Teilnetz 301 fest durch das Großkraftwerk 310 geführt wird. Es kommt aber auch in Betracht, dass die Zentralsteuereinheit 316 für beide Teilnetze 301 und 302 das Verwenden einer Frequenzanpasssteuerung vorsieht. Ggf. kann dabei auch eine Sollfrequenz übertragen werden.

Sind die beiden Frequenzen des ersten und zweiten Teilnetzes 301, 302 nun in ihrer Frequenz angeglichen, so kann dies bspw. von den Windparks 306 an die Zentralsteuereinheit 316 zurückgemeldet werden, denn die Windparks 306 erfassen ohnehin ständig die Frequenz. Dann kann die Zentralsteuereinheit 316 den Windparks 306 jeweils ein Signal übersenden, dass diese nun in die Frequenzhaltesteuerung umschalten.

Sobald diese Umschaltung in die Frequenzhaltesteuerung durchgeführt ist, kann die Zentralsteuereinheit 316 dann den Kopplungsschalter 314 den Befehl geben, die beiden Teilnetze 301 und 302 zu koppeln, nämlich zu verbinden. Dafür entsprechend der symbolisch dargestellte Kopplungsschalter 314 geschlossen. Natürlich ist das elektrische Versorgungsnetz einschließlich des Kopplungsschalters 314 dreiphasig ausgebildet, was hier der Einfachheit halber nicht dargestellt wurde.

Ist nun der Kopplungsschalter 314 geschlossen und arbeiten die beiden Teilnetze 301 und 302 dann im Wesentlichen stabil als ein Netz zusammen, kann auch wieder auf die Normalsteuerfunktion zurückgeschaltet werden. Auch das kann durch die Zentralsteuereinheit 316 gesteuert werden. Die Zentralsteuereinheit 316 kann dazu zunächst Daten von den Windparks 306 und dem Großkraftwerk 310 sammeln. Ggf. verfügt aber die Zentralsteuereinheit 316 bspw. über eine eigene Messeinheit, um den Zustand des elektrischen Versorgungsnetzes 300 zu erfassen.

Befindet sich nun aber das elektrische Versorgungsnetz 300 nach dem Verbinden der beiden Teilnetze 301 und 302 in einem stabilen Zustand, kann die Zentralsteuereinheit 316 den Windparks den Befehl geben, in die Normalsteuerfunktion zurückzuschalten.

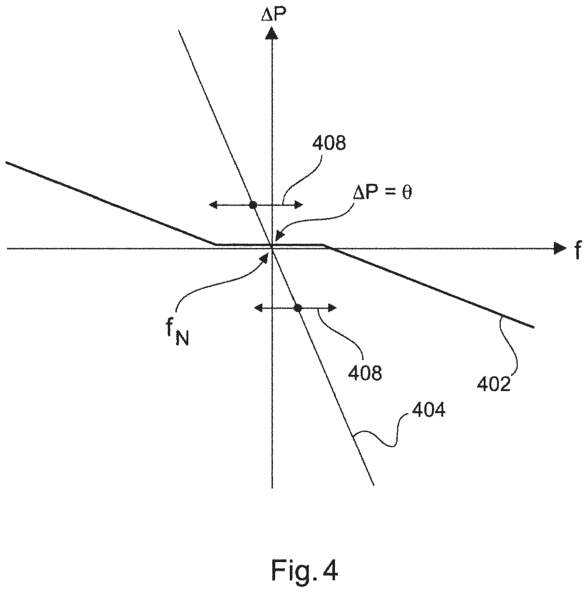

Eine Möglichkeit einer Umsetzung einer Frequenzhaltesteuerung im Vergleich zu einer Normalsteuerung ist in Figur 4 veranschaulicht. Figur 4 zeigt eine frequenzabhängige Leistungsregelung. Dazu sind eine Normalregelungskurve 402 und eine Frequenzhalteregelungskurve 404 veranschaulicht.

Die Normalregelungskurve 402 ist zur Verwendung als oder mit der Normalsteuerungsfunktion vorgesehen. Die Normalregelungskurve 402 weist einen Todbandbereich 406 auf, der gleichmäßig um die Nennfrequenz $f_N$ liegt. Außerhalb des Todbandbereichs 406 steigen bzw. fallen die beiden Zweige der Normalregelungskurve 402 mit vergleichsweise schwacher Steigung an bzw. ab. Befindet sich also die Frequenz f in der Nähe der Nennfrequenz $f_N$, so wird keine zusätzliche Wirkleistung P eingespeist bzw. die aktuell eingespeiste Wirkleistung nicht verringert.

Für die Frequenzhalteregelungskurve 404 wird in diesem Beispiel vorgeschlagen, dass kein Todbandbereich vorhanden ist. Eine frequenzabhängige Leistungserhöhung oder Verringerung findet somit sofort bei jeglicher Frequenzabweichung statt.

Außerdem ist zu erkennen, dass die Frequenzhalteregelungskurve 404 dem Betrage nach eine deutlich höhere Steigung als die Normalregelungskurve 402 aufweist. Es wird somit auch bei Frequenzabweichungen vergleichsweise viel Wirkleistung eingespeist bzw. gegenüber der aktuell eingespeisten Wirkleistung ergänzt oder verringert. Insoweit eine Erhöhung der Wirkleistung vorgesehen ist, so kann diese bspw. aus der Schwungmasse des Rotors der Windenergieanlage genommen werden, oder es wird dazu ein Energiespeicher, insbesondere eine Batterie verwendet.

Außerdem sind zwei Verschiebungspfeile 408 angedeutet, die verdeutlichen sollen, dass die Frequenzhalteregelungskurve 404 nicht unbedingt die Frequenzachse bei der Nennfrequenz $f_N$ schneiden muss. Stattdessen kann als Basisfrequenz, auf die auszuregeln ist, eine in dem Moment, wenn auf die Frequenzhaltefunktion umgeschaltet wird, vorhandene Frequenz als Frequenzsollwert verwendet werden.

Erfindungsgemäß wurde somit als Ziel erkannt, einen speziellen Netzsynchronisierungsbetriebsmodus bei Windenergieanlagen oder Windparks zu implementieren. Diese können nun dafür eine Frequenzruhe erreichen oder unterstützen.

Dabei wurde erkannt, dass beim Netzwiederaufbau die Frequenz bei der Zuschaltung von Lasten und Erzeugern stark schwanken kann. Es kann somit ein notwendiger Zustand einer Frequenzunruhe vorliegen.

Es wurde auch erkannt, dass dann, wenn man zwei aufgebaute Netzinseln verbinden will, also dazu synchronisieren will, die Frequenz beider Teilnetze angeglichen werden sollte. Besonders die Zuschaltung von Erzeugern und Verbrauchern sollte dann unterbrochen werden und es sollte eine Frequenzruhe ausgerufen bzw. vorgegeben werden, bei der die Frequenz konstant gehalten werden sollte.

Gemäß einer Ausführung kann eine der Netzinseln, die mit einem weiteren Teil des elektrischen Versorgungsnetzes zu verbinden ist, ein Windpark sein.

Als weiteres Problem wurde erkannt, dass dann, wenn ein Netz sehr wenig Momentanreserve, insbesondere wenig rotierende Massen aufweist, die Frequenz auch bei kleinen Änderungen der Last schwankte und die Synchronisation erschwert wird.

Als Lösung wird vorgeschlagen

- Festhalten der Frequenz im Netz für einen kurzen Zeitraum, quasi per Knopfdruck.
- Dazu kann für einen kurzen Zeitraum eine sehr große Schwungmasse emuliert werden, oder es kann eine sehr schnelle frequenzabhängige Leistungsregelung aktiviert werden. Besonders regelt diese in positiver und negativer Richtung, und als Sollfrequenz wird die aktuelle Ist-Frequenz vorgeschlagen.

Als Option wird eine Funktionalität zum Angleichen der Frequenzen in den zu synchronisierenden Teilnetzen vorgeschlagen. Ein Vorschlag dazu ist eine Leistungsanpassung in beiden Teilnetzen. Es müssen also die Frequenzen angeglichen werden, um eine gemeinsame Zielsynchronisationsfrequenz zu erreichen, dazu kann vorgeschlagen werden, dass die Leistung in einem der Teilnetze, oder in beiden der Teilnetze jeweils so verändert wird, dass sich die betreffende Frequenz zur Zielsynchronisationsfrequenz hin ändert.

Auch ein automatisierter Ablauf wird vorgeschlagen, der folgende Schritte nacheinander abarbeitet: Schnelle Frequenzangleichung der zu verbindenden Netze, dann Zuschaltung des abgetrennten Netzabschnitts bzw. Verbinden der Teilnetze und dann gemeinsamer Betrieb der verbundenen Teilnetze.

**Patentansprüche**

1. Verfahren zum Einspeisen elektrischer Leistung an einem Netzanschlusspunkt (118) in ein elektrisches Versorgungsnetz (120, 300), das eine Netzfrequenz aufweist, mittels einer umrichtergeführten Erzeugungseinheit (100), insbesondere einer Windenergieanlage (100),
**dadurch gekennzeichnet, dass**
das Verfahren folgende Schritte umfasst:

   - Einspeisen elektrischer Leistung in Abhängigkeit einer Steuerfunktion, wobei die elektrische Leistung Wirk- und Blindleistung umfassen kann, und
   - als Steuerfunktion zwischen einer Normalsteuerfunktion und wenigstens einer zur Normalsteuerfunktion verschiedenen Frequenzhaltesteuerfunktion ausgewählt werden kann, und
   - die Normalsteuerfunktion ausgewählt wird, wenn erkannt wurde, dass das elektrische Versorgungsnetz (120, 300) in einem Normalzustand arbeitet und
   - die Frequenzhaltesteuerfunktion ausgewählt wird, wenn ein Betriebszustand einer Frequenzruhe vorliegt oder vorbereitet wird, wobei ein Betriebszustand einer Frequenzruhe einen Betriebszustand besonders des elektrischen Versorgungsnetzes (120, 300) beschreibt, in dem die Netzfrequenz auf einem konstanten Wert zu halten ist.

2. Verfahren nach Anspruch 1,
**dadurch gekennzeichnet, dass**
die Frequenzhaltesteuerfunktion die Leistung wenigstens in Abhängigkeit der Netzfrequenz des elektrischen Versorgungsnetzes (120, 300) so steuert, dass die Netzfrequenz gestützt wird, wobei die Frequenzhaltesteuerfunktion so ausgebildet und/oder parametriert ist, dass sie die Netzfrequenz stärker stützt, als die Normalsteuerfunktion die Netzfrequenz stützt.

3. Verfahren nach Anspruch 1 oder 2,
**dadurch gekennzeichnet, dass**

   - die Frequenzhaltesteuerfunktion eine Emulation eines Verhaltens einer Synchronmaschine mit einer virtuellen rotierenden Schwungmasse mit einem virtuellen Trägheitsmoment beinhaltet, und
   - die Leistung mit einer Frequenz eingespeist wird, die proportional zu einer Drehzahl der virtuellen rotierenden Schwungmasse vorgegeben wird, wobei vorzugsweise das virtuelle Trägheitsmoment einstellbar ist.

4. Verfahren nach einem der vorstehenden Ansprüche,
**dadurch gekennzeichnet, dass**

   - die Steuerfunktion eine Emulation eines Verhaltens einer Synchronmaschine mit einer virtuellen rotierenden Masse mit einem virtuellen Trägheitsmoment beinhaltet, und
   - die Leistung mit einer Frequenz eingespeist wird, die proportional zu einer Drehzahl der virtuellen Schwungmasse vorgegeben wird, wobei
   - das virtuelle Trägheitsmoment einstellbar ist und für die Frequenzhaltesteuerfunktion ein größeres virtuelles Trägheitsmoment eingestellt wird als für die Normalsteuerfunktion.

5. Verfahren nach Anspruch 4,
**dadurch gekennzeichnet, dass**
das virtuelle Trägheitsmoment der Frequenzhaltesteuerung im Vergleich zur Normalsteuerfunktion wenigstens auf einen 2-fachen, vorzugsweise wenigstens auf einen 5-fachen und insbesondere wenigstens auf einen 10-fachen Wert eingestellt wird.

6. Verfahren nach einem der vorstehenden Ansprüche,
**dadurch gekennzeichnet, dass**

   - zum Einspeisen der Leistung ein Strom mit einer Frequenz und einer Phase eingespeist wird,
   - die Frequenz und optional die Phase des eingespeisten Stroms durch eine mit einer virtuellen Drehzahl ($\omega_v$) rotierende virtuelle Masse vorgegeben wird,
   - die rotierende virtuelle Masse ein einstellbares virtuelles Trägheitsmoment ($J_v$) aufweist, so dass in der rotierenden Masse eine virtuelle kinetische Energie ($E_v$) gespeichert ist, nach der Formel:

$$E_v = 1/2 J_v\, \omega_v^2$$

   - wobei die Frequenz (f) des eingespeisten Stroms proportional zur virtuellen Drehzahl ($\omega_v$) ist, insbesondere mit dem Zusammenhang: $\omega_v = 2\pi f$, und
   - die virtuelle kinetische Energie in Abhängigkeit einer Leistungsabweichung verändert wird, wobei die Leistungsabweichung ein Überschreiten der eingespeisten Wirkleistung über eine Anfangswirkleistung oder über eine vorgegebene Wirkleistung beziffert, und

- die Veränderung der virtuellen kinetischen Energie insbesondere so erfolgt, dass sie um die über die Zeit integrierte Abweichungsleistung verändert wird und dabei entsprechend ihre virtuelle Drehzahl verändert.

7. Verfahren nach einem der vorstehenden Ansprüche, **dadurch gekennzeichnet, dass**

- eine Ist-Frequenz erfasst wird, insbesondere am Netzanschlusspunkt (118),
- eine Frequenzabweichung als Abweichung der erfassten Ist-Frequenz von einer Referenzfrequenz bestimmt wird,
- die Frequenzhaltesteuerfunktion eine einzuspeisende Leistung, insbesondere Wirkleistung, in Abhängigkeit der Frequenzabweichung über eine Reglerfunktion mit einstellbarer Reglerverstärkung vorgibt und
- die Reglerverstärkung so vorgegeben wird, dass die Netzfrequenz stärker gestützt wird als durch die Verwendung der Normalsteuerfunktion.

8. Verfahren nach Anspruch 7, **dadurch gekennzeichnet, dass**

- die Normalsteuerfunktion auch eine einzuspeisende Leistung, insbesondere Wirkleistung, in Abhängigkeit der Frequenzabweichung über eine Reglerfunktion mit einstellbarer Reglerverstärkung vorgibt, wobei
- die Reglerverstärkung der Frequenzhaltesteuerung im Vergleich zur Normalsteuerfunktion wenigstens auf einen 2-fachen, vorzugsweise wenigstens auf einen 5-fachen und insbesondere wenigstens auf einen 10-fachen Wert eingestellt wird.

9. Verfahren nach einem der vorstehenden Ansprüche, **dadurch gekennzeichnet, dass** als eine bzw. die Referenzfrequenz eine erfasste Frequenz oder ein Mittelwert einer erfassten Frequenz, insbesondere Netzfrequenz am Netzanschlusspunkt zum Zeitpunkt der Umschaltung auf die Frequenzhaltesteuerfunktion als konstanter Frequenzwert verwendet wird.

10. Verfahren nach einem der vorstehenden Ansprüche, **dadurch gekennzeichnet, dass**

- die Frequenzhaltesteuerung nur für einen vorbestimmten Frequenzruhezeitraum verwendet wird und
- der vorbestimmte Frequenzruhezeitraum weniger als 1 Minute beträgt, vorzugsweise weniger als 30 Sekunden und insbesondere weniger als 15 Sekunden.

11. Verfahren nach einem der vorstehenden Ansprüche, **dadurch gekennzeichnet, dass**

- die umrichtergeführte Erzeugungseinheit wenigstens eine Windenergieanlage (100) mit einem aerodynamischen Rotor umfasst oder ist,
- die Frequenzhaltesteuerung zur Stützung der Netzfrequenz mehr Leistung aufwendet als die Normalsteuerfunktion, so dass für einen bzw. den Frequenzruhezeitraum zusätzliche Leistung in das elektrische Netz eingespeist werden kann, oder aus diesem entnommen werden kann und
- die zusätzliche Leistung, oder ein Teil davon, aus kinetischer Energie des Rotors (106) genommen wird, oder als kinetische Energie in den Rotor (106) eingespeichert wird.

12. Verfahren nach einem der vorstehenden Ansprüche, **dadurch gekennzeichnet, dass**

- bei einem Umschalten von der Normalsteuerfunktion auf die Frequenzhaltesteuerfunktion der in dem Moment aktuelle Wert der erfassten Netzfrequenz oder ein Mittelwert einer erfassten Frequenz als Frequenzsollwert ausgewählt wird,
- insbesondere dass der so ausgewählte Frequenzsollwert als konstanter Wert für die gesamte Dauer eines bzw. des Frequenzruhezeitraums festgelegt wird, und
- dass insbesondere für die gesamte Dauer des Frequenzruhezeitraums mit der Frequenzhaltesteuerfunktion auf diesen Frequenzsollwert geregelt wird.

13. Verfahren nach einem der vorstehenden Ansprüche, **dadurch gekennzeichnet, dass**

- das elektrische Versorgungsnetz (120, 300) in Teilnetze (301, 302) unterteilbar ist und
- die Frequenzhaltesteuerfunktion ausgewählt wird, wenn solche Teilnetze (301, 302) verbunden werden sollen.

14. Verfahren nach einem der vorstehenden Ansprüche, **dadurch gekennzeichnet, dass**

- zusätzlich eine Frequenzanpasssteuerfunktion vorgesehen ist, um die Frequenz eines Teilnetzes (301, 302) bzw. eines der Teilnetze (301, 302) an die Frequenz eines zweiten Teilnetzes (302) bzw. eines zweiten der Teilnetze (302, 301) anzugleichen, und
- in Vorbereitung des Betriebszustands einer Frequenzruhe zunächst nach der Normalsteuerfunktion die Frequenzanpasssteuerfunktion ausgewählt wird, um die Angleichung der Frequenzen durchzuführen und
- anschließend, wenn die Frequenzen angeglichen sind, die Frequenzhaltesteuerfunktion auszuwählen.

15. Verfahren nach Anspruch 14, **dadurch gekennzeichnet, dass**

- nach dem Auswählen der Frequenzhaltesteuerfunktion wenigstens die beiden Teilnetze (301, 302) miteinander verbunden werden und insbesondere
- die Schritte

- in Vorbereitung des Betriebszustands einer Frequenzruhe zunächst nach der Normalsteuerfunktion die Frequenzanpasssteuerfunktion auszuwählen,
- anschließend, wenn die Frequenzen angeglichen sind, die Frequenzhaltesteuerfunktion auszuwählen und
- optional nach dem Auswählen der Frequenzhaltesteuerfunktion wenigstens die beiden Teilnetze (301, 302) miteinander zu verbinden, automatisiert durchgeführt werden.

16. Verfahren nach einem der vorstehenden Ansprüche, **dadurch gekennzeichnet, dass** eine Übergangsfunktion vorgesehen ist, zum Vorgeben oder Steuern einer Änderung von der Frequenzhaltesteuerfunktion zur Normalsteuerfunktion, und/oder von der Normalsteuerfunktion zur Frequenzhaltesteuerfunktion, wobei vorzugsweise die Übergangsfunktion jeweils zum Ändern von Einstellungen, insbesondere von Parametern jeweils eine Zeitkennlinie vorgibt, so dass sich die Einstellungen bzw. Parameter entlang dieser Zeitkennlinie ändern können.

17. Verfahren nach Anspruch 16, **dadurch gekennzeichnet, dass** die Übergangsfunktion für die Änderung einen Übergangszeitraum vorgibt, wobei der Zeitraum vorzugsweise im Bereich von 1 bis 10 Sekunden, insbesondere 2 bis 5 Sekunden liegt, und

- über den Übergangszeitbereich sich zwischen der Frequenzhaltesteuerfunktion und der Normalsteuerfunktion unterscheidende Einstellungen, zumindest Parameter, stetig, vorzugsweise streng monoton, insbesondere linear jeweils von ihrem jeweiligen Wert bei der Frequenzhaltesteuerfunktion zu ihrem jeweiligen Wert bei der Normalsteuerfunktion verändern, bzw. umgekehrt, und/oder
- dass für den Übergangszeitraum für Änderungen von Blindleistungsabgaben und/oder von Wirkleistungsabgaben der umrichtergeführten Erzeugungseinheit Grenzgradienten vorgegeben werden, so dass sich Blindleistungsabgaben und/oder Wirkleistungsabgaben dem Betrage nach höchstens so schnell ändern, dass die Grenzgradienten nicht überschritten werden.

18. Verfahren nach einem der vorstehenden Ansprüche, **dadurch gekennzeichnet, dass**

- die Frequenzhaltesteuerfunktion und optional die Normalsteuerfunktion und ggf. die Frequenzanpasssteuerfunktion in Abhängigkeit wenigstens einer externen Anforderung, insbesondere von einem Netzbetreiber, ausgewählt wird, wobei vorzugsweise
- die Erzeugereinheit über eine Schnittstelle, insbesondere eine Datenschnittstelle, eine oder mehrere solcher externen Anforderungen empfangen kann.

19. Verfahren nach einem der vorstehenden Ansprüche, **dadurch gekennzeichnet, dass** beim Auswählen der Frequenzhaltefunktion die umrichtergeführte Erzeugungseinheit (100) von einem stromprägenden Betrieb auf einen spannungsprägenden Betrieb umschaltet, oder zumindest bei Verwendung mehrerer Umrichtereinheiten oder Wechselrichtereinheiten wenigstens eine oder mehrere dieser Umrichter- oder Wechselrichtereinheiten auf einen spannungsprägenden Betrieb umschaltet.

20. Windenergiesystem, (112) insbesondere Windenergieanlage (100) oder Windpark (112), dazu eingerichtet, als umrichtergeführte Erzeugungseinheit elektrische Leistung an einem Netzanschlusspunkt (118) in ein elektrisches Versorgungsnetz (120, 300) einzuspeisen, das eine Netzfrequenz ausweist, **dadurch gekennzeichnet, dass** das Windenergiesystem umfasst:

- eine Einspeiseeinheit zum Einspeisen elektrischer Leistung in Abhängigkeit einer Steuerfunktion, wobei die elektrische Leistung Wirk- und Blindleistung umfassen kann,
- eine Steuereinheit, in der die Steuerfunktion implementiert ist und die dazu eingerichtet ist, dass als Steuerfunktion zwischen einer Normalsteuerfunktion und wenigstens einer zur Normalsteuerfunktion verschiedenen Frequenzhaltesteuerfunktion ausgewählt werden kann, wobei die Steuereinheit dazu eingerichtet ist, dass

- die Normalsteuerfunktion ausgewählt wird, wenn erkannt wurde, dass das elektrische Versorgungsnetz (120, 300) in einem Normalzustand arbeitet und
- die Frequenzhaltesteuerfunktion ausgewählt wird, wenn ein Betriebszustand einer Frequenzruhe vorliegt oder vorbereitet wird, wobei ein Betriebszustand einer Frequenzruhe einen Betriebszustand besonders des elektrischen Versorgungsnetzes (120, 300) beschreibt, in dem die Netzfrequenz auf einem konstanten Wert zu halten ist.

21. Windenergiesystem (112) nach Anspruch 20,
**dadurch gekennzeichnet, dass**
ein Energiespeicher zum Bereitstellen elektrischer Energie zum Durchführen der Frequenzhaltesteuerfunktion vorgesehen ist.

22. Windenergiesystem (112) nach Anspruch 20 oder 21,
**dadurch gekennzeichnet, dass**
eine Schnittstelle, insbesondere eine Datenschnittstelle, vorgesehen ist, um wenigstens eine Anforderung zum Auswählen einer Steuerfunktion zu empfangen.

23. Windenergiesystem (112) nach Anspruch 20, 21 oder 22,
**dadurch gekennzeichnet, dass**
das Windenergiesystem (112) dazu eingerichtet ist, ein Verfahren nach einem der Ansprüche 1 bis 19 auszuführen.

**Claims**

1. A method for supplying electric power at a network connection point (118) into an electric supply network (120, 300) having a network frequency by means of a converter-controlled generator unit (100), in particular a wind turbine (100), **characterized in that**,
the method comprises the following steps:

   - supplying electric power depending on a control function, wherein the electric power can comprise active and reactive power, and
   - as a control function between a normal control function and at least one frequency-maintaining control function differing from the normal control function a selection can be made, and
   - the normal control function is selected if it has been recognized that the electric supply network (120, 300) is operating in a normal state, and
   - the frequency-maintaining control function is selected if a steady-frequency operating state is present or is being prepared, wherein a steady-frequency operating state describes an operating state particularly of the electric supply network (120, 300) in which the network frequency is to be maintained at a constant value.

2. The method as claimed in claim 1,
**characterized in that**
the frequency-maintaining control function controls the power at least depending on a network frequency of the electric supply network (120, 300) in such a way that the network frequency is supported, wherein the frequency-maintaining control function is designed and/or parameterized in such a way that it supports the network frequency more strongly than the normal control function supports the network frequency.

3. The method as claimed in claim 1 or 2,
**characterized in that**

   - the frequency-maintaining control function entails an emulation of a behavior of a synchronous machine with a virtual rotating oscillating weight with a virtual moment of inertia, and
   - the power is supplied at a frequency which is predefined as proportional to a rotational speed of the virtual rotating oscillating weight, wherein the virtual moment of inertia is preferably settable.

4. The method as claimed in one of the preceding claims,
**characterized in that**

   - the frequency-maintaining control function entails an emulation of a behavior of a synchronous machine with a virtual rotating oscillating weight with a virtual moment of inertia, and
   - the power is supplied at a frequency which is predefined as proportional to a rotational speed of the virtual rotating oscillating weight, wherein
   - the virtual moment of inertia is preferably settable and a greater virtual moment of inertia is set for the frequency-maintaining control function than for the normal control function.

5. The method as claimed in claim 4,
**characterized in that**
the virtual moment of inertia of the frequency-maintaining control is set in comparison with the normal control function at least to a twofold, preferably at least to a fivefold and, in particular, at least to a tenfold value.

6. The method as claimed in one of the preceding claims,
**characterized in that**

   - a current having a frequency and phase is fed in for the power supply,
   - the frequency and optionally the phase of the supplied current are predefined by a virtual weight rotating at a virtual rotational speed ($\omega_V$),

- the rotating virtual weight has a settable virtual moment of inertia ($J_v$), so that a virtual kinetic energy ($E_v$) is stored in the rotating weight, according to the formula:

$$E_v = 1/2 J_v \, \omega_v^2$$

- wherein the frequency (f) of the supplied current is proportional to the virtual rotational speed ($\omega_v$), in particular with the relationship: $\omega_v = 2\pi f$, and
- the virtual kinetic energy is modified depending on a power deviation, wherein the power deviation quantifies the extent to which the supplied active power is exceeded above an initial active power or above a predefined active power, and
- the virtual kinetic energy is modified, in particular, in such a way that it is modified by the amount of the deviation power integrated over time and thus modifies its virtual rotational speed accordingly.

7. The method as claimed in one of the preceding claims,
   **characterized in that**

   - an actual frequency is monitored, particularly at the network connection point (118),
   - a frequency deviation is determined as a deviation of the monitored actual frequency from a reference frequency,
   - the frequency-maintaining control function predefines a power, in particular an active power, which is to be supplied depending on the frequency deviation via a controller function with a settable controller gain, and
   - the controller gain is predefined in such a way that the network frequency is more strongly supported than through the use of the normal control function.

8. The method as claimed in claim 7,
   **characterized in that**

   - the normal control function also predefines a power, in particular an active power, which is to be supplied depending on the frequency deviation via a controller function with a settable controller gain,
   - wherein the controller gain of the frequency-maintaining control is set in comparison with the normal control function at least to a twofold, preferably at least to a fivefold and, in particular, at least to a tenfold value.

9. The method as claimed in one of the preceding claims,

**characterized in that**
as a or the reference frequency, a monitored frequency or a mean value of a monitored frequency, in particular the network frequency at the network connection point at the time of the switchover to the frequency-maintaining control function is used as a constant frequency value.

10. The method as claimed in one of the preceding claims,
    **characterized in that**

    - the frequency-maintaining control is used for a predefined steady-frequency time period only, and
    - the predefined steady-frequency time period is less than 1 minute, preferably less than 30 seconds and, in particular, less than 15 seconds.

11. The method as claimed in one of the preceding claims,
    **characterized in that**

    - the converter-controlled generator unit comprises or is at least one wind turbine (100) with an aerodynamic rotor,
    - the frequency-maintaining control consumes more power than the normal control function to support the network frequency so that additional power can be fed into or drawn from the electric network for a or the steady-frequency time period, and
    - the additional power or a part thereof is obtained from kinetic energy of the rotor (106), or is stored as kinetic energy in the rotor (106).

12. The method as claimed in one of the preceding claims,
    **characterized in that**

    - the presently prevailing value of the monitored network frequency or a mean value of a monitored frequency is selected as a frequency reference value in the event of a switchover from the normal control function to the frequency-maintaining control function,
    - in particular that the frequency reference value selected in this way is specified as a constant value for the entire duration of a or the steady-frequency time period, and
    - adjustment to this frequency reference value is performed with the frequency-maintaining control function, in particular for the entire duration of the steady-frequency time period.

13. The method as claimed in one of the preceding claims,
    **characterized in that**

- the electric supply network (120, 300) is dividable into subnetworks (301, 302) and
- the frequency-maintaining control function is selected if such subnetworks (301, 302) are intended to be connected.

14. The method as claimed in one of the preceding claims,
**characterized in that**

- a frequency-adapting control function is additionally provided in order to match the frequency of a subnetwork (301, 302) or one of the subnetworks (301, 302) to the frequency of a second subnetwork (302) or a second of the subnetworks (302, 301), and
- the frequency-adapting control function is selected initially following the normal control function in preparation for the steady-frequency operating state in order to carry out the matching of the frequencies, and
- then, when the frequencies are matched, to select the frequency-maintaining control function.

15. The method as claimed in claim 14,
**characterized in that**

- at least the two subnetworks (301, 302) are interconnected following the selection of the frequency-maintaining control function and, in particular,
- the steps of

- initially selecting the frequency-maintaining control function following the normal control function in preparation for the steady-frequency operating state,
- then, when the frequencies are matched, selecting the frequency-maintaining control function, and
- optionally following the selection of the frequency-maintaining control function, interconnecting at least the two subnetworks (301, 302),

are carried out in an automated manner.

16. The method as claimed in one of the preceding claims, **characterized in that** a transition function is provided to predefine or control a change from the frequency-maintaining control function to the normal control function and/or from the normal control function to the frequency-maintaining control function, wherein the transition function in each case preferably specifies a time characteristic in order to change settings, in particular parameters, so that the settings or parameters can change along this time characteristic.

17. The method as claimed in claim 16, **characterized in that** the transition function predefines a transition time period for the change, wherein the time period is preferably in the range from 1 to 10 seconds, in particular 2 to 5 seconds, and

- settings, at least parameters, differing over the transition time period between the frequency-maintaining control function and the normal control function change constantly, preferably strictly uniformly, in particular linearly, in each case from their respective value in the frequency-maintaining control function to their respective value in the normal control function, or vice versa, and/or
- limit gradients are predefined for the transition time period for changes in reactive power outputs and/or active power outputs of the converter-controlled generator units, so that reactive power outputs and/or active power outputs change in terms of their amount at most so quickly that the limit gradients are not exceeded.

18. The method as claimed in one of the preceding claims,
**characterized in that**

- the frequency-maintaining control function and optionally the normal control function and, if necessary, the frequency-adapting control function are selected depending at least on an external request, in particular from a network operator,
- wherein the generator unit can preferably receive one or more such external requests via an interface, in particular a data interface.

19. The method as claimed in one of the preceding claims,
**characterized in that**
the converter-controlled generator unit (100) switches over from a current-impressing mode to a voltage-impressing mode when selecting the frequency-maintaining function or, at least if a plurality of converter units or inverter units are used, switches at least one or more of these converter units or inverter units over to a voltage-impressing mode.

20. A wind energy system (112), in particular a wind turbine (100) or windfarm (112), is adapted in order to supply electric power as a converter-controlled generator unit at a network connection point (118) into an electric supply network (120, 300) having a network frequency, **characterized in that** the wind energy system comprises:

- a supply unit to supply electric power depending on a control function, wherein the electric power can comprise active and reactive power,
- a control unit in which the control function is implemented and which is adapted to select as a control function between a normal control function and at least one frequency-maintaining control function differing from the normal control function as a control function, wherein the control unit is configured that

- the normal control function is selected if it has been recognized that the electric supply network (120, 300) is operating in a normal state, and
- the frequency-maintaining control function is selected if a steady-frequency operating state is present or is being prepared, wherein a steady-operating state describes an operating state, particularly of the electric supply network (120, 300), in which the network frequency is to be maintained at a constant value.

21. The wind energy system (112) as claimed in claim 20,
**characterized in that**
an energy store is provided to provide electric energy to perform the frequency-maintaining control function.

22. The wind energy system (112) as claimed in claim 20 or 21,
**characterized in that**
an interface, in particular a data interface, is provided in order to receive at least one request for the selection of a control function.

23. The wind energy system (112) as claimed in claim 20, 21 or 22, **characterized in that**
the wind energy system (112) is adapted to carry out a method as claimed in one of claims 1 to 19.


**Revendications**

1. Procédé d'injection de puissance électrique au niveau d'un point de raccordement de réseau (118) dans un réseau d'alimentation (120, 300) électrique qui présente une fréquence de réseau, au moyen d'une unité de génération (100) guidée par convertisseur, en particulier une éolienne (100),
**caractérisé en ce que**
le procédé comporte les étapes suivantes :

- l'injection de puissance électrique selon une fonction de commande, dans lequel la puissance électrique peut comporter une puissance active et réactive, et

- peut être sélectionnée comme fonction de commande entre une fonction de commande normale et au moins une fonction de commande de maintien de fréquence différente de la fonction de commande normale, et
- la fonction de commande normale est sélectionnée lorsqu'il a été reconnu que le réseau d'alimentation (120, 300) électrique fonctionne dans un état normal et
- la fonction de commande de maintien de fréquence est sélectionnée lorsqu'un état de fonctionnement d'un repos fréquentiel se présente ou est préparé, dans lequel un état de fonctionnement d'un repos fréquentiel décrit un état de fonctionnement particulièrement du réseau d'alimentation (120, 300) électrique, dans lequel la fréquence de réseau est à maintenir à une valeur constante.

2. Procédé selon la revendication 1,
**caractérisé en ce que**
la fonction de commande de maintien de fréquence commande la puissance au moins en fonction de la fréquence de réseau du réseau d'alimentation (120, 300) électrique de sorte que la fréquence de réseau soit soutenue, dans lequel la fonction de commande de maintien de fréquence est réalisée et/ou paramétrée de sorte qu'elle soutienne plus fortement la fréquence de réseau que la fonction de commande normale ne soutient la fréquence de réseau.

3. Procédé selon la revendication 1 ou 2, **caractérisé en ce que**

- la fonction de commande de maintien de fréquence contient une émulation d'un comportement d'une machine synchrone avec une masse d'inertie rotative virtuelle avec un moment d'inertie virtuel, et
- la puissance est injectée avec une fréquence qui est prédéfinie proportionnellement à une vitesse de rotation de la masse d'inertie rotative virtuelle, dans lequel le moment d'inertie virtuel est de préférence réglable.

4. Procédé selon l'une quelconque des revendications précédentes,
**caractérisé en ce que**

- la fonction de commande contient une émulation d'un comportement d'une machine synchrone avec une masse rotative virtuelle avec un moment d'inertie virtuel, et
- la puissance est injectée avec une fréquence qui est prédéfinie proportionnellement à une vitesse de rotation de la masse d'inertie virtuelle, dans lequel
- le moment d'inertie virtuel est réglable et pour la fonction de commande de maintien de fréquence un moment d'inertie virtuel plus grand que pour la fonction de commande normale est réglé.

5. Procédé selon la revendication 4,
**caractérisé en ce que**
le moment d'inertie virtuel de la commande de maintien de fréquence est réglé par rapport à la fonction de commande normale au moins à 2 fois une valeur, de préférence au moins à 5 fois et en particulier au moins à 10 fois.

6. Procédé selon l'une quelconque des revendications précédentes,
**caractérisé en ce que**

- un courant avec une fréquence et une phase est injecté pour l'injection de la puissance,
- la fréquence et en option la phase du courant injecté est prédéfinie par une masse virtuelle rotative avec une vitesse de rotation virtuelle ($\omega_v$),
- la masse virtuelle rotative présente un moment d'inertie virtuel réglable ($J_v$) de sorte que dans la masse rotative une énergie ($E_v$) cinétique virtuelle est enregistrée, selon la formule :

$$\mathrm{Ev} = 1 / 2\, \mathrm{J_v} \omega_\mathrm{v}{}^2$$

- dans lequel la fréquence (f) du courant injecté est proportionnelle à la vitesse de rotation ($\omega_v$) virtuelle, en particulier avec le rapport $\omega_v = 2\pi f$, et
- l'énergie cinétique virtuelle est modifiée en fonction d'un écart de puissance, dans lequel l'écart de puissance chiffre un dépassement de la puissance active injectée au-dessus d'une puissance active initiale ou au-dessus d'une puissance active prédéfinie, et
- la modification de l'énergie cinétique virtuelle est effectuée en particulier de sorte qu'elle soit modifiée de la puissance d'écart intégrée dans le temps et modifie en conséquence sa vitesse de rotation virtuelle.

7. Procédé selon l'une quelconque des revendications précédentes,
**caractérisé en ce que**

- une fréquence réelle est détectée, en particulier au niveau du point de raccordement de réseau (118),
- un écart de fréquence est déterminé comme écart de la fréquence réelle détectée par rapport à une fréquence de référence,
- la fonction de commande de maintien de fréquence prédéfinit une puissance à injecter, en particulier puissance active, en fonction de l'écart de fréquence au-dessus d'une fonction de régulateur avec un renforcement de régulateur réglable et
- le renforcement de régulateur est prédéfini de sorte que la fréquence de réseau soit soutenue plus fortement que par l'utilisation de la fonction de commande normale.

8. Procédé selon la revendication 7,
**caractérisé en ce que**

- la fonction de commande normale prédéfinit aussi une puissance à injecter, en particulier puissance active, en fonction de l'écart de fréquence au-dessus d'une fonction de régulateur avec renforcement de régulateur réglable, dans lequel
- le renforcement de régulateur de la commande de maintien de fréquence est réglé par rapport à la fonction de commande normale au moins à 2 fois une valeur, de préférence au moins à 5 fois et en particulier au moins à 10 fois.

9. Procédé selon l'une quelconque des revendications précédentes,
**caractérisé en ce que**
comme une ou la fréquence de référence, une fréquence détectée ou une valeur médiane d'une fréquence détectée, en particulier fréquence de réseau au niveau du point de raccordement de réseau au moment de la commutation à la fonction de commande de maintien de fréquence est utilisée comme valeur de fréquence constante.

10. Procédé selon l'une quelconque des revendications précédentes,
**caractérisé en ce que**

- la commande de maintien de fréquence est utilisée seulement pour une période de repos fréquentiel prédéterminée et
- la période de repos fréquentiel prédéterminée s'élève à moins de 1 minute, de préférence à moins de 30 secondes et en particulier à moins de 15 secondes.

11. Procédé selon l'une quelconque des revendications précédentes,
**caractérisé en ce que**

- l'unité de génération guidée par convertisseur comporte ou est au moins une éolienne (100) avec un rotor aérodynamique,
- la commande de maintien de fréquence pour le soutien de la fréquence de réseau applique plus de puissance que la fonction de commande normale de sorte que pour une ou la période de repos fréquentiel, la puissance supplémentaire puisse être injectée dans le réseau électrique, ou puisse être retirée de celui-ci et
- la puissance supplémentaire ou une partie de celle-ci, est prise de l'énergie cinétique du rotor (106), ou est stockée comme énergie cinétique dans le rotor (106).

12. Procédé selon l'une quelconque des revendications précédentes,
**caractérisé en ce que**

- lors d'une commutation de la fonction de commande normale à la fonction de commande de maintien de fréquence la valeur actuelle dans le moment de la fréquence de réseau détectée ou une valeur médiane d'une fréquence détectée est sélectionnée comme valeur de consigne de fréquence,
- en particulier que la valeur de consigne de fréquence ainsi sélectionnée est fixée comme valeur constante pour la durée entière d'une ou de la période de repos fréquentiel, et
- qu'en particulier il est régulé pour la durée entière de la période de repos fréquentiel avec la fonction de commande de maintien de fréquence à cette valeur de consigne de fréquence.

13. Procédé selon l'une quelconque des revendications précédentes,
**caractérisé en ce que**

- le réseau d'alimentation (120, 300) électrique peut être divisé en réseaux partiels (301, 302) et
- la fonction de commande de maintien de fréquence est sélectionnée lorsque de tels réseaux partiels (301, 302) doivent être reliés.

14. Procédé selon l'une quelconque des revendications précédentes,
**caractérisé en ce que**

- une fonction de commande d'adaptation de fréquence est en outre prévue afin d'ajuster la fréquence d'un réseau partiel (301, 302) ou d'un des réseaux partiels (301, 302) à la fréquence d'un deuxième réseau partiel (302) ou d'un second des réseaux partiels (302, 301), et
- en préparation de l'état de fonctionnement d'un repos fréquentiel tout d'abord selon la fonction de commande normale, la fonction de commande d'adaptation de fréquence est sélectionnée afin de réaliser l'ajustement des fréquences et
- ensuite lorsque les fréquences sont ajustées, de sélectionner la fonction de commande de maintien de fréquence.

15. Procédé selon la revendication 14,
**caractérisé en ce que**

- après la sélection de la fonction de commande de maintien de fréquence, au moins les deux réseaux partiels (301, 302) sont reliés entre eux et en particulier
- les étapes

- en préparation de l'état de fonctionnement d'un repos fréquentiel tout d'abord de sélection selon la fonction de commande normale de la fonction de commande d'adaptation de fréquence,
- ensuite lorsque les fréquences sont ajustées, de sélection de la fonction de commande de maintien de fréquence et
- en option après la sélection de la fonction de commande de maintien de fréquence de liaison entre eux au moins des deux réseaux partiels (301, 302) ,

sont réalisées de manière automatisée.

16. Procédé selon l'une quelconque des revendications précédentes, **caractérisé en ce qu'**une fonction de transition est prévue pour prédéfinir ou commander une modification de la fonction de commande de maintien de fréquence à la fonction de commande normale, et/ou de la fonction de commande normale à la fonction de commande de maintien de fréquence, dans lequel de préférence la fonction de transition respectivement pour la modification de réglages, en particulier de paramètres prédéfinit respectivement une caractéristique temporelle de sorte que les réglages ou paramètres puissent se modifier le long de cette caractéristique temporelle.

17. Procédé selon la revendication 16, **caractérisé en ce que** la fonction de transition pour la modification prédéfinit une période de transition, dans lequel la période se trouve de préférence dans la plage de 1 à 10 secondes, en particulier de 2 à 5 secondes, et

- des réglages se distinguant entre la fonction de commande de maintien de fréquence et la fonction de commande normale sur la plage de temps de transition, modifient au moins des paramètres, en permanence, de préférence de manière fortement monotone, en particulier linéairement respectivement de leur valeur respective pour la fonction de commande de maintien de fréquence à leur valeur respective pour la fonction de commande normale, ou inversement, et/ou
- que pour la période de transition pour des modifications de délivrances de puissance réactive et/ou de délivrances de puissance active de l'unité de génération guidée par convertisseur, des gradients limites sont prédéfinis de sorte que des délivrances de puissance réactive et/ou délivrances de puissance active se modifient au plus selon la quantité si rapidement que les gradients limites ne sont pas dépassés.

**18.** Procédé selon l'une quelconque des revendications précédentes, **caractérisé en ce que**

- la fonction de commande de maintien de fréquence et en option la fonction de commande normale et éventuellement la fonction de commande d'adaptation de fréquence est sélectionnée en fonction au moins d'une exigence externe, en particulier d'un exploitant de réseau, dans lequel de préférence
- l'unité de générateur peut recevoir par le biais d'une interface, en particulier une interface de données, une ou plusieurs exigences externes de la sorte.

**19.** Procédé selon l'une quelconque des revendications précédentes, **caractérisé en ce que** lors de la sélection de la fonction de maintien de fréquence, l'unité de génération (100) guidée par convertisseur commute d'un fonctionnement formant le courant à un fonctionnement formant la tension, ou au moins lors de l'utilisation de plusieurs unités de convertisseur ou unités d'onduleur au moins une ou plusieurs de ces unités de convertisseur ou onduleur à un fonctionnement formant la tension.

**20.** Système éolien (112) en particulier éolienne (100) ou parc éolien (112) conçu afin d'injecter comme unité de génération guidée par convertisseur une puissance électrique au niveau d'un point de raccordement de réseau (118) dans un réseau d'alimentation (120, 300) électrique qui présente une fréquence de réseau, **caractérisé en ce que** le système éolien comporte :

- une unité d'injection pour l'injection de puissance électrique en fonction d'une fonction de commande, dans lequel la puissance électrique peut comporter une puissance active et réactive,
- une unité de commande, dans laquelle la fonction de commande est mise en œuvre et qui est conçue afin qu'il puisse être sélectionné comme fonction de commande entre une fonction de commande normale et au moins une fonction de commande de maintien de fréquence différente de la fonction de commande normale, dans lequel l'unité de commande est conçue afin que
- la fonction de commande normale est sélectionnée lorsqu'il a été reconnu que le réseau d'alimentation (120, 300) électrique fonctionne dans un état normal et
- la fonction de commande de maintien de fréquence est sélectionnée lorsqu'un état de fonctionnement d'un repos fréquentiel se présente ou est préparé, dans lequel un état de fonctionnement d'un repos fréquentiel décrit un état de fonctionnement particulièrement du réseau d'alimentation (120, 300) électrique, dans lequel la fréquence de réseau est à maintenir à une valeur constante.

**21.** Système éolien (112) selon la revendication 20, **caractérisé en ce que** un accumulateur d'énergie est prévu pour la fourniture d'énergie électrique pour la réalisation de la fonction de commande de maintien de fréquence.

**22.** Système éolien (112) selon la revendication 20 ou 21, **caractérisé en ce que** une interface, en particulier une interface de données, est prévue afin de recevoir au moins une exigence de sélection d'une fonction de commande.

**23.** Système éolien (112) selon la revendication 20, 21 ou 22, **caractérisé en ce que** le système éolien (112) est conçu afin de réaliser un procédé selon l'une quelconque des revendications 1 à 19.

Fig. 1

Fig. 2

Fig. 3

Fig. 4

**EP 3 639 340 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 762134 A
- DE 3236071 A1
- DE 102005026062 A1
- DE 102013207264 A1
- DE 102014214151 A1
- DE 102015203367 A1
- US 20150260159 A1
- WO 2010055332 A2
- DE 102007049251 A1